(19) Europäisches Patentamt
European Patent Office
Office européen des brevets

(11) **EP 4 598 138 A1**

(12) **EUROPEAN PATENT APPLICATION**

(43) Date of publication:
06.08.2025 Bulletin 2025/32

(21) Application number: 25155355.8

(22) Date of filing: 31.01.2025

(51) International Patent Classification (IPC):
*H04W 48/12* (2009.01)     *H04W 52/02* (2009.01)
*H04W 76/28* (2018.01)

(52) Cooperative Patent Classification (CPC):
**H04W 48/12;** H04W 52/0206; H04W 52/0216;
H04W 76/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2024 US 202463548931 P**

(71) Applicant: **Comcast Cable Communications, LLC
Philadelphia, PA 19103 (US)**

(72) Inventors:
• **KEATING, Ryan
Philadelphia, 19103 (US)**
• **ZHOU, Hua
Philadelphia, 19103 (US)**

• **DINAN, Esmael Hejazi
Philadelphia, 19103 (US)**
• **CIRIK, Ali Cagatay
Philadelphia, 19103 (US)**
• **KIM, Taehun
Philadelphia, 19103 (US)**
• **JEON, Hyoungsuk
Philadelphia, 19103 (US)**
• **PRASAD, Gautham
Philadelphia, 19103 (US)**
• **DASHTAKI, Mohammad Ghadir Khoshkholgh
Philadelphia, 19103 (US)**

(74) Representative: **V.O.
P.O. Box 87930
2508 DH Den Haag (NL)**

(54) **SYSTEM INFORMATION CHANGE FOR ON-DEMAND TRANSMISSION**

(57)     A wireless device may request system information, such as a system information block, from a base station on demand. The base station may indicate to the wireless device a change in system information via a message, for example, during a time period that the base station is not sending system information to the wireless device. The wireless device may expect to receive updated system information, for example, based on receiving the message, without having to send a request to the base station for system information.

**FIG. 25**

**EP 4 598 138 A1**

**Description**

CROSS-REFERENCE TO RELATED APPLICATIONS

This application claims the benefit of U.S. Provisional Application No. 63/548,931 filed on February 2, 2024. The above referenced application is hereby incorporated by reference in its entirety.

BACKGROUND

A wireless device communicates with a base station. The base station sends various configuration parameters to the wireless device via one or more cells.

SUMMARY

The following summary presents a simplified summary of certain features. The summary is not an extensive overview and is not intended to identify key or critical elements.

A base station may configure a wireless device with configuration parameters for transmissions. System information may be used to configure the wireless device for transmissions, for example, based on a request (e.g., based on a triggering condition, on-demand). The base station may inform the wireless device of a change in system information. The base station may send a message with an indication of the change, for example, during a period when the base station is not sending system information to the wireless device. The wireless device may expect to receive updated system information, for example, based on receiving the message, without having to send a request to the base station. Improvements such as saved energy and/or reduced latency may be achieved.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17 shows an example of synchronization signal block (SSB) configurations.

FIG. 18 shows an example of SSB transmissions.

FIG. 19 shows examples of SSB transmissions.

FIG. 20 shows an example MIB message.

FIG. 21 shows an example of a SIB1 message.

FIG. 22 shows an example of SIB1 transmissions.

FIG. 23 shows an example of a short message.

FIG. 24 shows an example of system information change notification.

FIG. 25 shows an example of energy saving in wireless communication systems.

FIG. 26A and FIG. 26B show example methods of energy saving in a wireless communication system.

FIG. 27A and FIG. 27B show example methods of energy saving in a wireless communication system.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

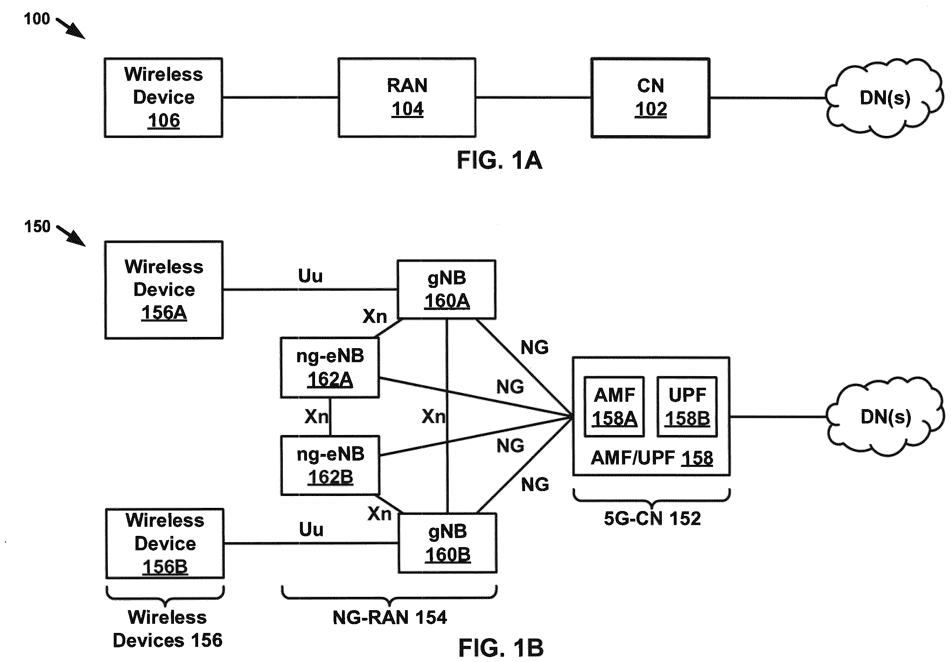

FIG. 1A shows an example communication network 100. The communication network 100 may comprise a mobile communication network. The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with the one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over/via an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e. g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a Generation Node B (base station/gNB), an Next Generation Evolved Node B (ng-eNB), a relay node (e.g., an integrated access and backhaul (IAB) node), a donor node (e.g., a donor eNB, a donor base station/gNB, etc.), an access point (AP) (e.g., a Wi-Fi access point), a transmission and reception point (TRP), a computing device, a device capable of wirelessly communicating, or any other device capable of sending and/or receiving signals. A base station may comprise one or more of the elements listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an eNB (e.g., associated with Evolved-Universal Terrestrial Radio Access (E-UTRA) and/or fourth-generation (4G) standards), a remote radio head (RRH), a baseband processing unit coupled to one or more RRHs, a repeater node or relay node used to extend the coverage area of a donor node, a ng-eNB, a base station/gNB (e.g., associated with New Radio (NR) and/or fifth-generation (5G) standards), an AP (e.g., associated with, for example, Wi-Fi or any other suitable wireless communication standard), any other generation base station, and/or any combination thereof. A base station may comprise one or more devices, such as at least one base station central device (e.g., a base station/gNB Central Unit (gNB-CU)) and at least one base station distributed device (e.g., a base station/gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an AP, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to the one or more DNs 170. The wireless device(s) 156 may communicate with the one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs 170, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G-CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/LTPF device 158. The UPF device 158B may serve as a gateway between the RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs 170, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., base stations/gNBs comprising a base station/gNB 160A and a base station/gNB 160B (collectively base stations/gNBs 160)) and/or one or more second-type base stations (e.g., ng-eNBs comprising an ng-eNB 162A and an ng-eNB 162B (collectively ng-eNBs 162)). The RAN 154 may comprise one or more of any quantity of types of base station. The base stations/gNBs 160 and/or ng-eNBs 162 may be referred to as base stations. The base stations (e.g., the gNBs 160 and/or ng-eNBs 162) may comprise one or more sets of antennas for communicating with the wireless device(s) 156 wirelessly (e.g., an over an air interface). One or more base stations (e.g., the gNBs 160 and/or the ng-eNBs 162) may comprise multiple sets of antennas to respectively control multiple cells (or sectors). The cells of the base stations (e.g., the gNBs 160 and/or the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G-CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMFIUPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide E-UTRA user plane and control plane protocol terminations towards the wireless device(s) 156 via a Uu interface (e.g., where E-UTRA may refer to the 3GPP 4G radio-access technology). A base station (e.g., the ng-eNB 162B) may provide E-UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user).

The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, IoT devices, hotspots, cellular repeaters, computing devices, and/or, more generally, UE. Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a 6G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

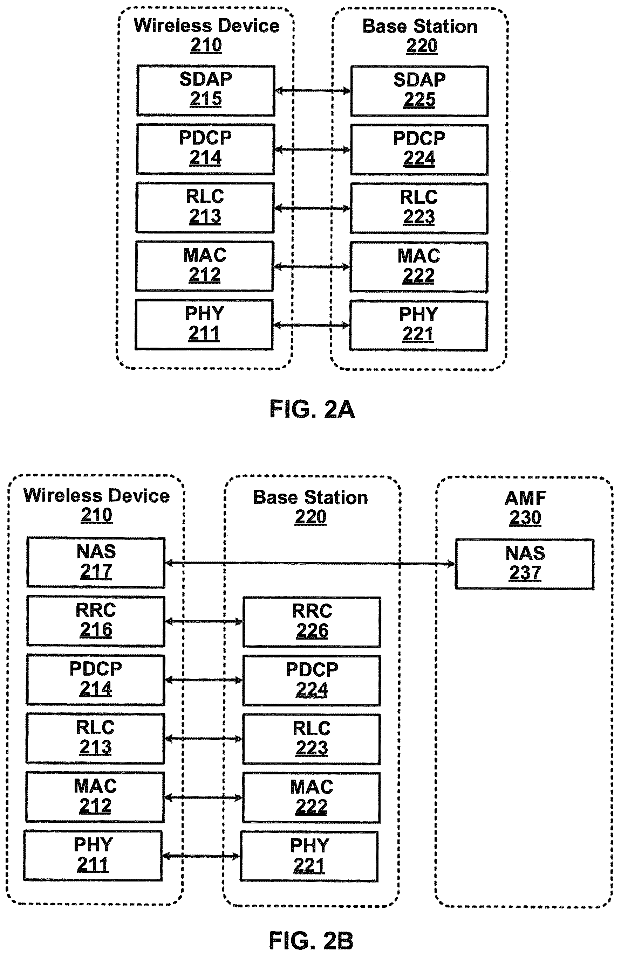

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configurations and/or the control plane configurations may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

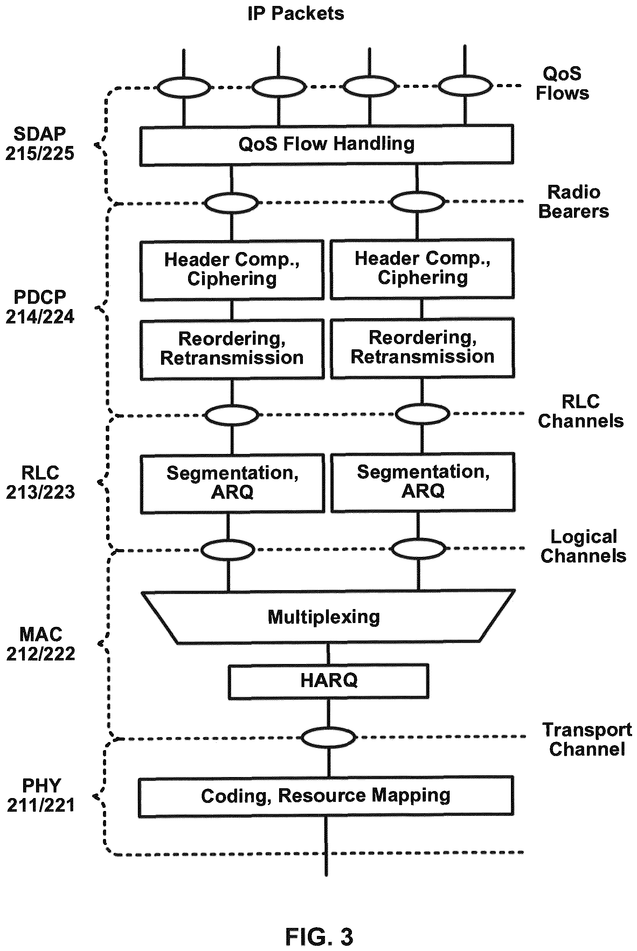

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform QoS flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows 310 of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers (e.g., RLCs 213 and 223) may perform one or more of the noted functions, for example, based on the transmission mode the RLC layer (e.g., RLCs 213 and 223) is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels 330 as a service to the PDCP layers (e.g., PDCPs 214 and 224, respectively), such as shown in FIG. 3.

The MAC layers (e.g., MACs 212 and 222) may perform multiplexing/demultiplexing of logical channels 340 and/or mapping between logical channels 340 and transport channels 350. The multiplexing/demultiplexing may comprise multiplexing/demultiplexing of data units/data portions, belonging to the one or more logical channels 340, into/from Transport Blocks (TBs) delivered to/from PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels 340 of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels 350 to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

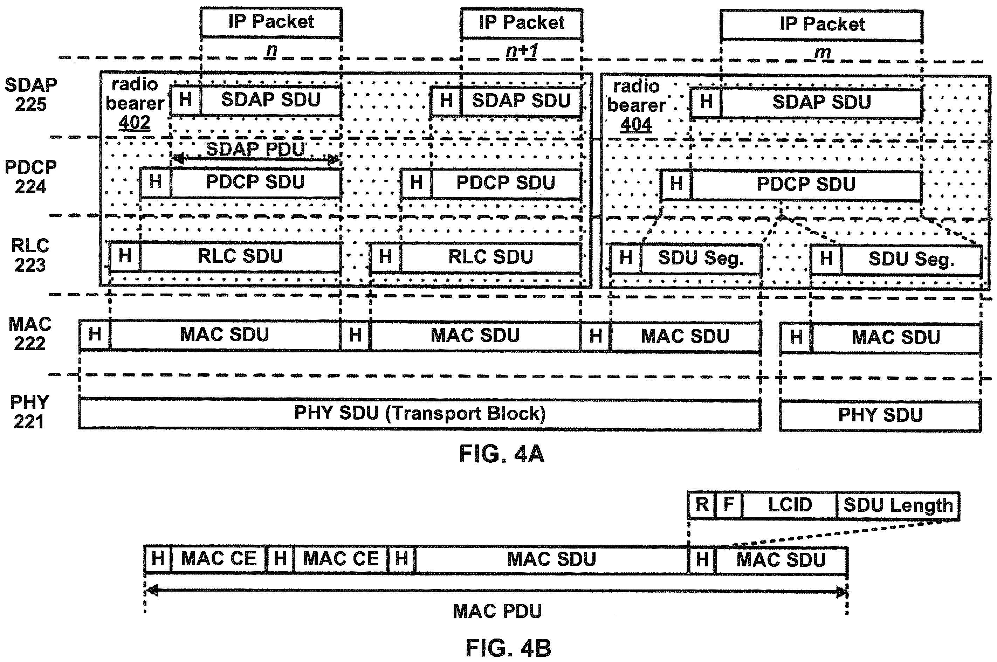

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number/-quantity of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 212 or MAC 222. As shown in FIG. 4B, two MAC CEs may be inserted into/added to the MAC PDU. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

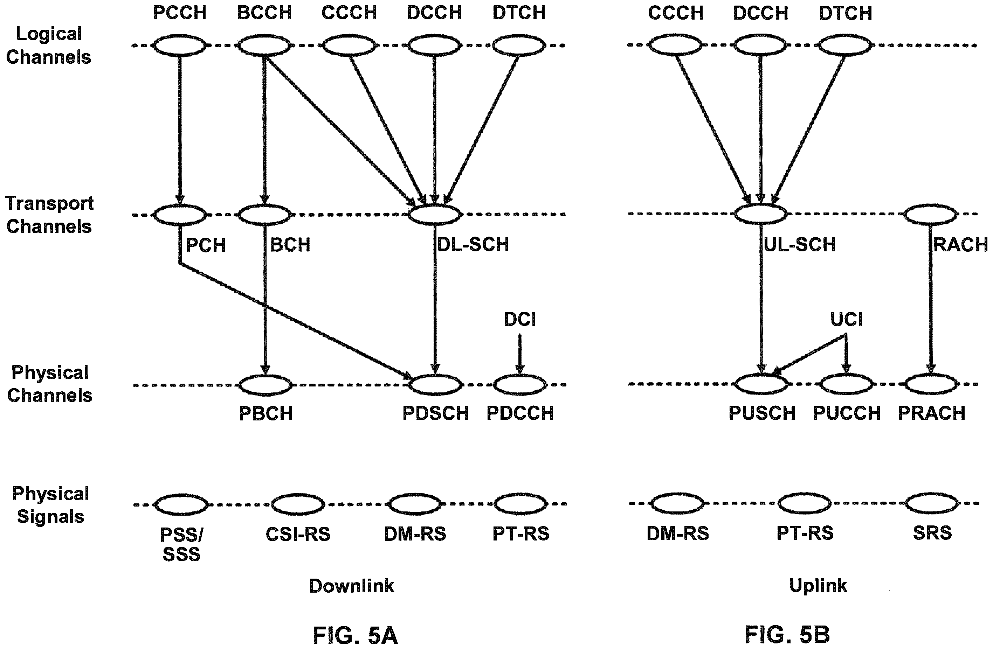

FIG. 5A shows an example mapping for downlink channels. The mapping for downlink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may comprise an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as layer 1 or layer 2 (e.g., L1 or L2, Layer 1/Layer 2, L1/L2, Layer 1 or layer 2, Layer 1 or Layer 2, L 1/2, Layer 1/2, layer 1/2, etc.) control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The PHY layer may generate physical signals to support the low-level operation of the PHY layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), SRS, phase-tracking reference signals (PT RS), and/or any other signals.

One or more of the channels (e.g., logical channels, transport channels, physical channels, etc.) may be used to carry out functions associated with the control plane protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHYs 211 and 221, MACs 212 and 222, RLCs 213 and 223, and PDCPs 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane protocol stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and substantially the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting and control of the reporting; detection of and recovery from radio link failure (RLF); and/or NAS message transfer. As part of establishing an RRC connection, the RRC layers 216 and 226 may establish an RRC context, which may involve configuring parameters for communication between the wireless device 210 and the RAN (e.g., the base station 220).

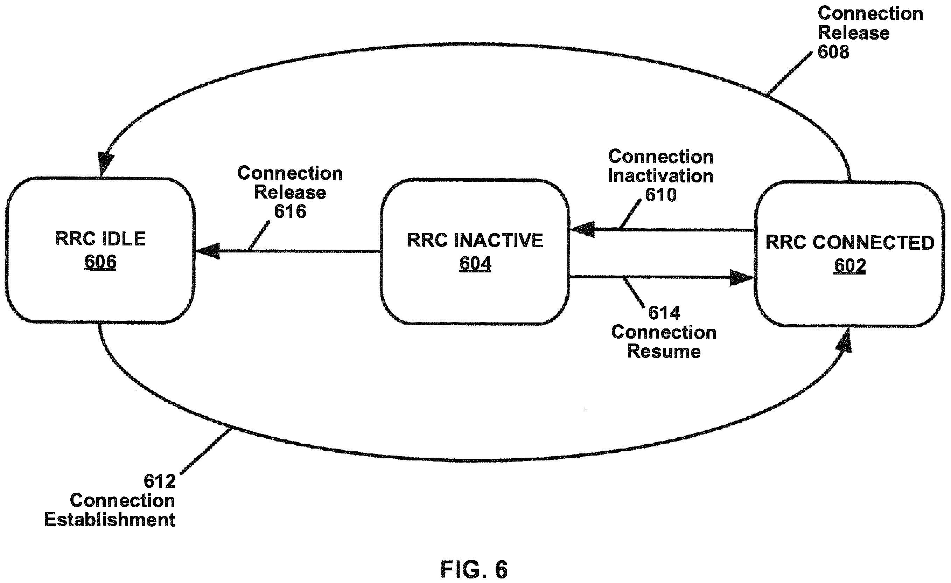

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the base stations/gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104, the RAN 154, or any other RAN). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., the RRC connected 602) to an RRC idle state (e.g., the RRC idle 606) via a connection release procedure 608. The RRC state may transition from the RRC connected state (e.g., the RRC connected 602) to the RRC inactive state (e.g., the RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., one time in every DRX cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be substantially the same as or similar to connection release procedure 608.

An RRC state may be associated with a mobility management mechanism. During the RRC idle state (e.g., the RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC inactive state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., the RRC inactive 604).

A base station (e.g., the gNBs 160 in FIG. 1B or any other base station) may be split in two parts: a central unit (e.g., a base station central unit, such as a gNB-CU) and one or more distributed units (e.g., a base station distributed unit, such as a gNB-DU). A base station central unit (CU) may be coupled to one or more base station distributed units (DUs) using an F 1 interface (e. g., an F 1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM may be a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbol streams may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

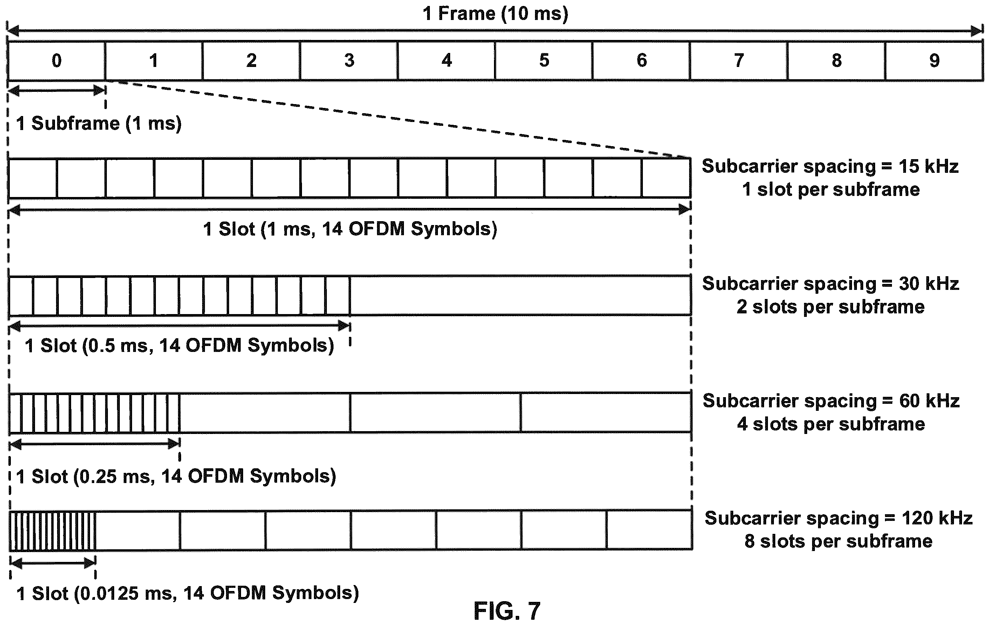

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR radio frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

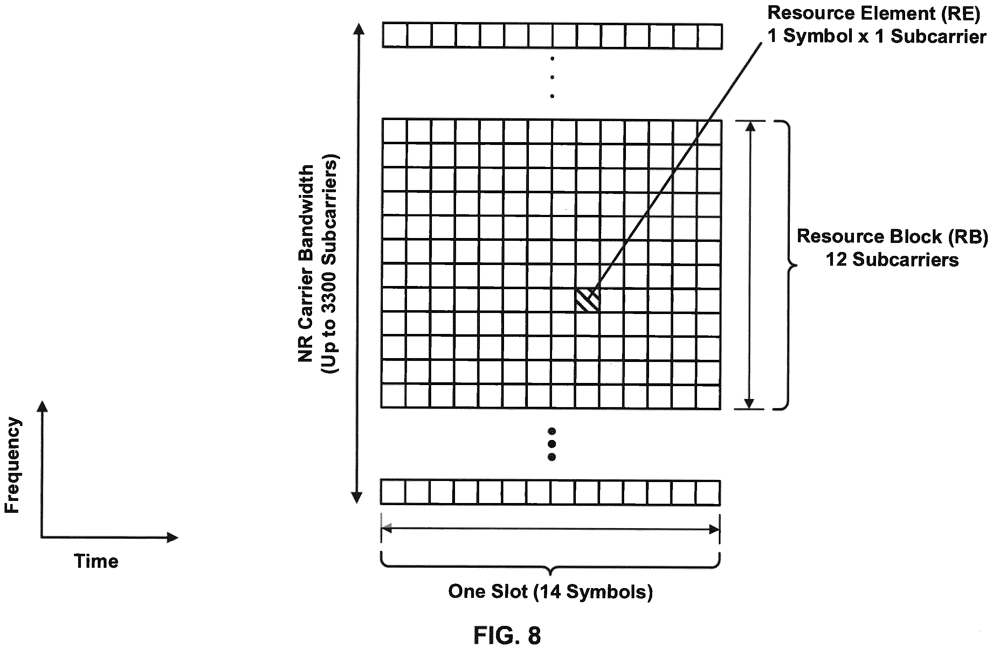

FIG. 8 shows an example resource configuration of one or more carriers. The resource configuration may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR carrier such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in DCI. A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

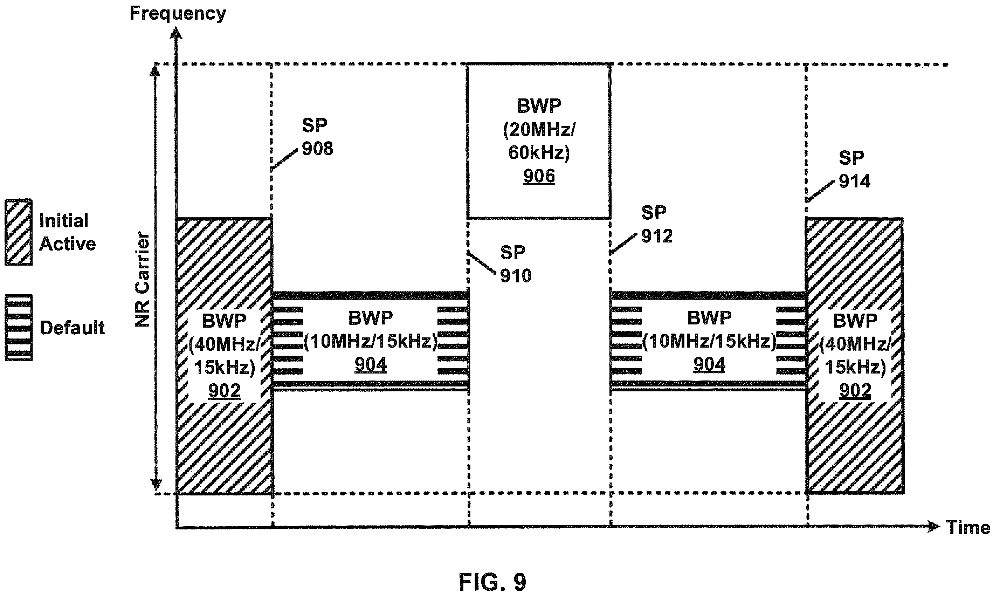

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at the switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating the BWP 904 as the active BWP. The wireless device may switch at a switching point 910 from the active BWP (e.g., the BWP 904) to the BWP 906, for example, after or in response receiving DCI indicating the BWP 906 as a new active BWP. The wireless device may switch at a switching point 912 from the active BWP (e.g., the BWP 906) to the BWP 904, for example, a based on (e.g., after or in response to) an expiry of a BWP inactivity timer. The wireless device may switch at the switching point 912 from the active BWP (e.g., the BWP 906) to the BWP 904, for example, after or in response to receiving DCI indicating the BWP 904 as a new active BWP. The wireless device may switch at a switching point 914 from the active BWP (e.g., the BWP 904) to the BWP 902, for example, after or in response receiving DCI indicating the BWP 902 as a new active BWP.

Wireless device procedures for switching BWPs on a secondary cell may be substantially the same/similar as those on a primary cell, for example, if the wireless device is configured for a secondary cell with a default downlink BWP in a set of configured downlink BWPs and a timer value. The wireless device may use the timer value and the default downlink BWP for the secondary cell in substantially the same/similar manner as the wireless device uses the timer value and/or default downlink BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

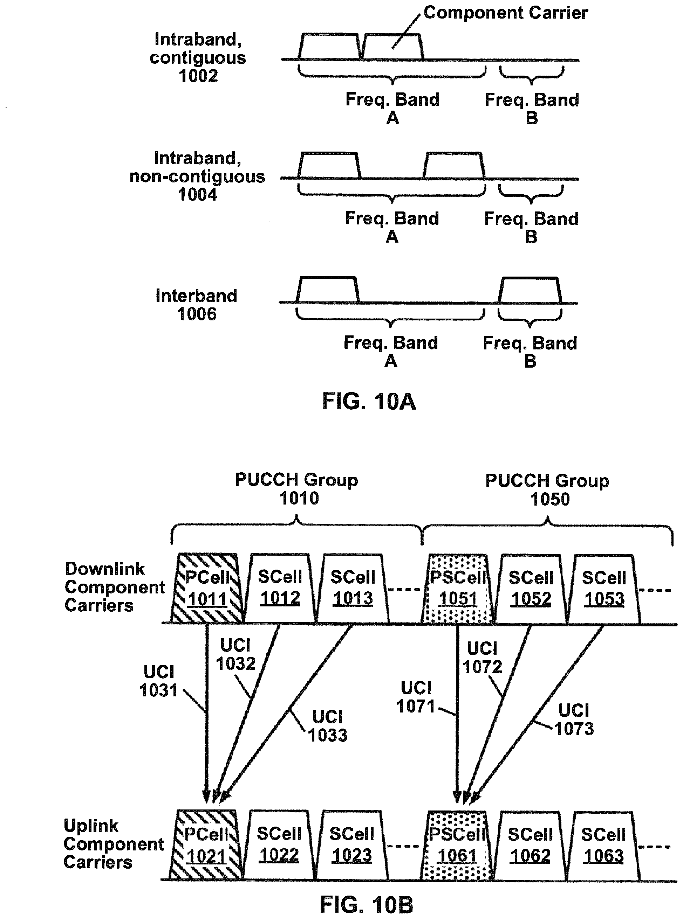

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-

configure the wireless device with NAS mobility information and the security input. Wireless devices may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information for the downlink, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. UCI may comprise control information for the uplink, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (orPSCell) 1051 (e.g., a DL SCC), an SCell 1052 (e.g., aDL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may use/apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

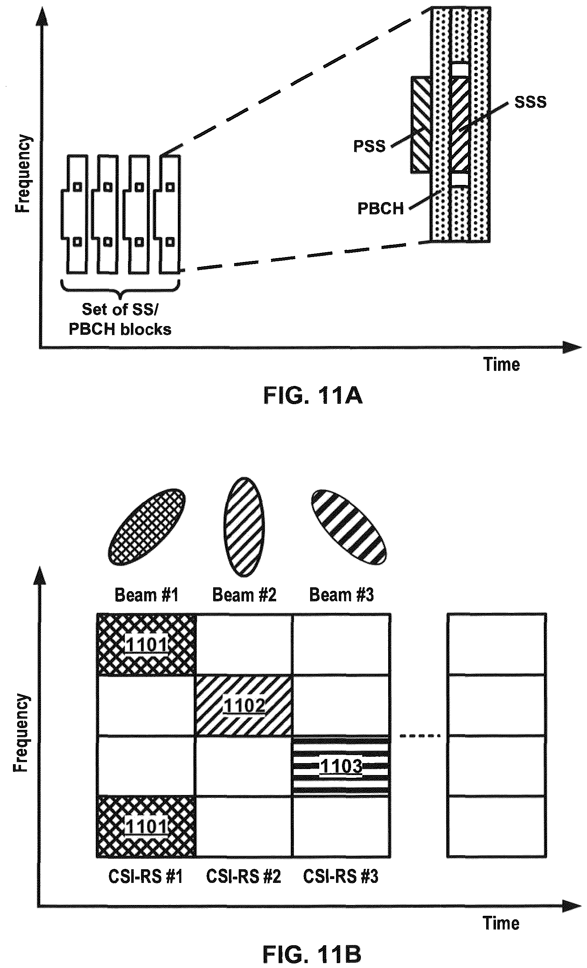

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB 1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial receiving (Rx) parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine CSI. The base station may configure the wireless device with one or more CSI-RSs for channel estimation or any other suitable purpose. The base station may configure a wireless device with one or more of substantially the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports (or any other quantity of orthogonal downlink DM-RS ports) per wireless device (e.g., for single user-MIMO). A DM-RS configuration may support up to 4 orthogonal downlink DM-RS ports (or any other quantity of orthogonal downlink DM-RS ports) per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be substantially the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI.A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with substantially the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number/quantity of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number/quantity of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as QCLed, for example, if one or more large-scale properties of the channel over which a first symbol on the first antenna port is conveyed may be inferred/determined from the channel over which a second symbol on a second antenna port is conveyed. The one or more large-scale properties may comprise at least one of: a delay spread; a Doppler spread; a Doppler shift; an average gain; an average delay; and/or spatial Rx parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a RB within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number/quantity of CSI-RS ports, a CSI-RS configuration (e.g., symbol and RE locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, QCL parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams may be shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure a reference signal received power (RSRP) of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number/quantity of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more SRS resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a PMI, a CQI, and/or a RI.

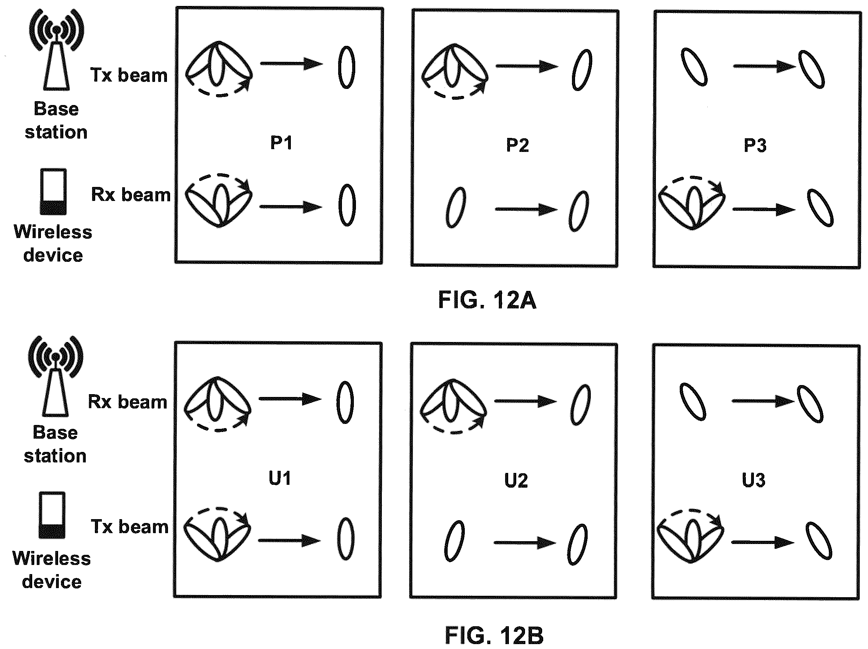

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the bottom row of U1 and top row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more RSs comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are substantially the same or similar as the channel characteristics from a transmission via the channel to the wireless device.

A network (e.g., an NR network comprising a base station/gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more SIBs (e.g., or any other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

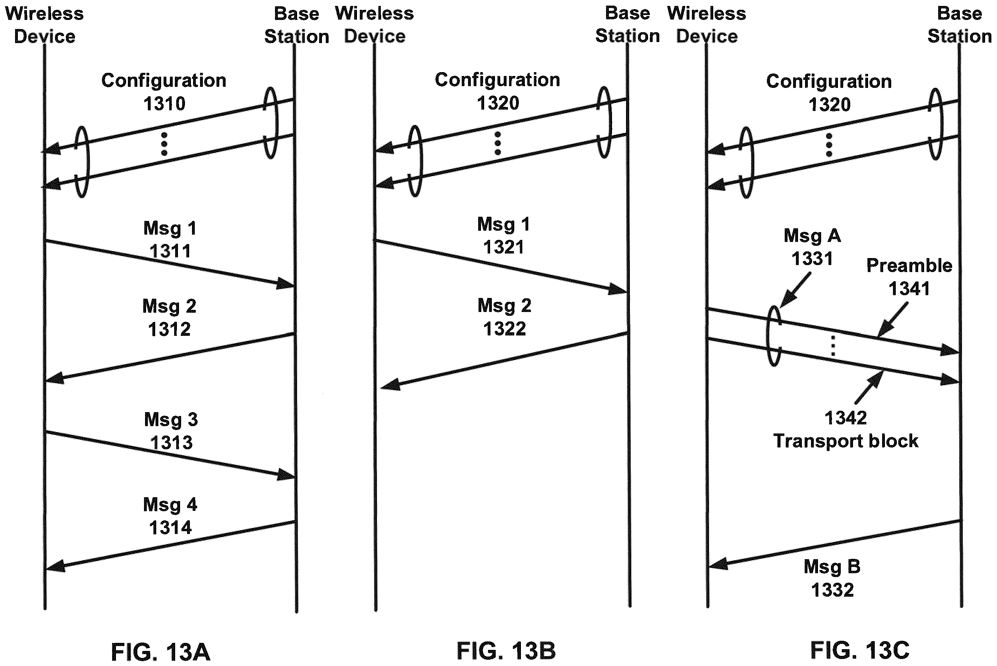

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more RACH parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more PRACH occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate at least one of: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. RNTIs may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI= 1 + s\_id + 14 \times t\_id + 14 \times 80 \times f\_id + 14 \times 80 \times 8 \times ul\_carrier\_id,$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless device on the PDCCH (e.g., the base station may send the PDCCH to the wireless device) using a C-RNTI, for example, if the C-RNTI was included in the third message (e.g., Msg 3 1313). The random access procedure may be determined to be successfully completed, for example, if the unique C-RNTI of the wireless device is detected on the PDCCH (e.g., the PDCCH is scrambled by the C-RNTI). The fourth message (e.g., Msg 4 1314) may be received using a DL-SCH associated with a TC-RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., for the first message (e.g., Msg 1 1311) and/or the third message (e.g., Msg 3 1313)). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

The first message (e.g., Msg A 1331) may be sent/transmitted in an uplink transmission by the wireless device. The first message (e.g., Msg A 1331) may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIG. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as layer 1 or layer 2 (e.g., L1 or L2, Layer 1/Layer 2, L1/L2, Layer 1 or layer 2, Layer 1 or Layer 2, L1/2, Layer 1/2, layer 1/2 etc.)) control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as DCI. The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number/quantity of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

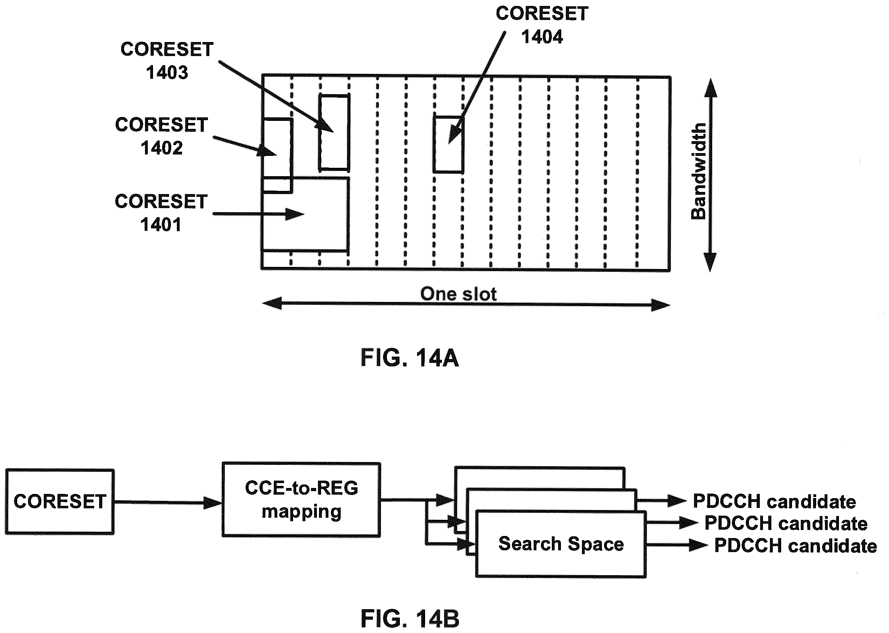

FIG. 14A shows an example of CORESET configurations. The CORESET configurations may be for a bandwidth part or any other frequency bands. The base station may send/transmit DCI via a PDCCH on one or more CORESETs. A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number/quantity of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise SR. The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from a PUCCH resource set for UCI (HARQ-ACK, CSI, and/or SR) transmission, for example, after determining the PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

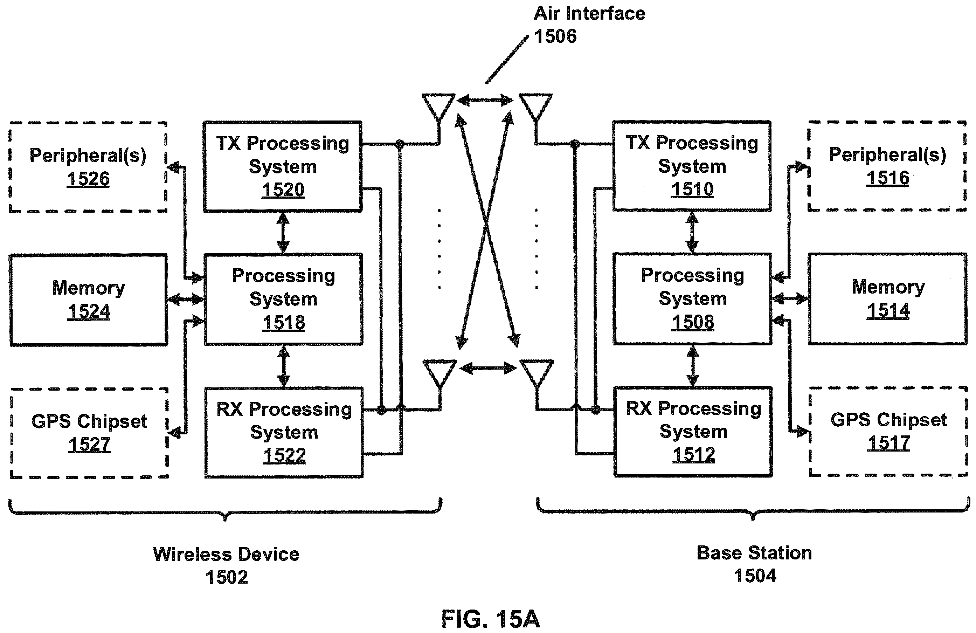

FIG. 15A shows an example of communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

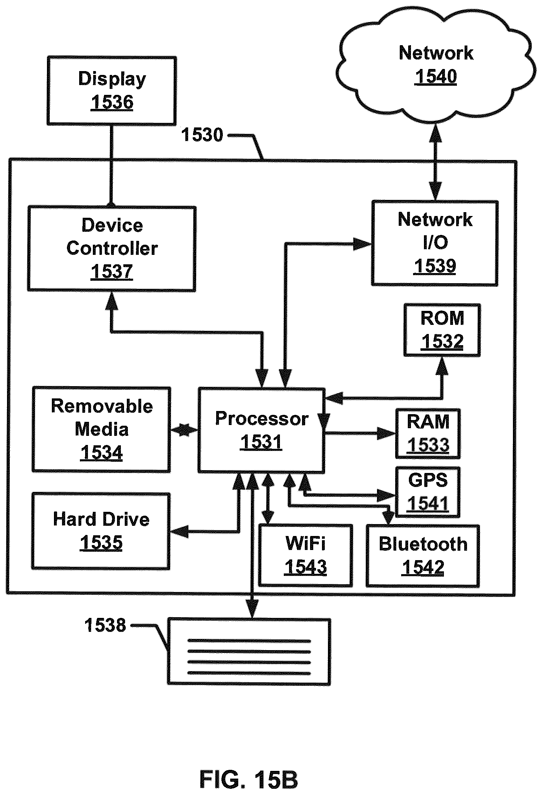

FIG. 15B shows example elements of a computing device that may be used to implement any of the various devices described herein, including, for example, the base station 160A, 160B, 162A, 162B, 220, 1504, 2402, and/or 2502, the wireless device 106, 156A, 156B, 210, 1502, 2401, and/or 2501 or any other base station, wireless device, AMF, UPF, network device, or computing device described herein. The computing device 1530 may include one or more processors 1531, which may execute instructions stored in the random-access memory (RAM) 1533, the removable media 1534 (such as a USB drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a GPS microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

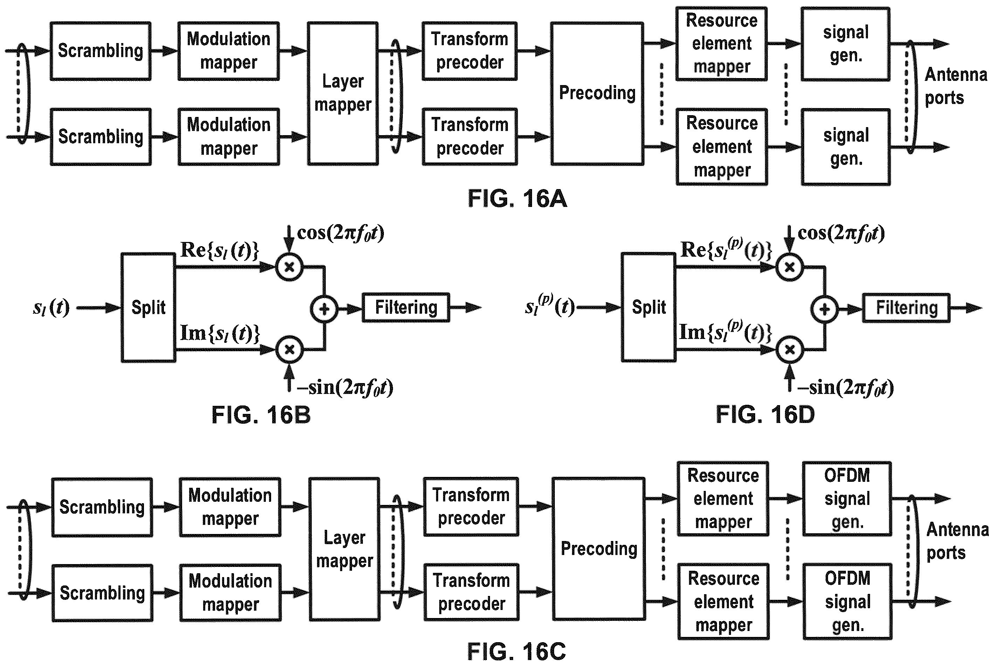

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements;

generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after it is started and continue running until it is stopped or until it expires. A timer may be started, for example, if it is not running or restarted if it is running. A timer may be associated with a value (e.g., the timer may be started or restarted from a value or may be started from zero and expire after it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A base station may send/transmit one or more SSBs (e.g., periodically) to a wireless device or a plurality of wireless devices. The wireless device (in RRC_IDLE state, RRC_INACTIVE state, or RRC_CONNECTED state) may use the one or more SSBs for time and frequency synchronization with a cell of the base station. An SSB, comprising a PSS, a SSS, a PBCH, and/or a PBCH DM-RS, may be sent/transmitted (e.g., as described with respect to FIG. 11A). An SSB may occupy a quantity/number (e.g., 4, or any other quantity) of OFDM symbols. The base station may send/transmit one or more SSBs in an SSB burst (e.g., to enable beam-sweeping for PSS/SSS and PBCH). An SSB burst may comprise a set of SSBs, with each SSB potentially being sent/transmitted via a corresponding different beam. SSBs, in the SSB burst, may be sent/transmitted using time-division multiplexing. An SSB burst may be within a time window (e.g., a 5 ms window, or a window of any other duration) and may be either located in first-half or in the second-half of a radio frame (e.g., with a duration of 10 ms, or any other duration). An SSB burst may be equivalently referred to as a transmission window (e.g., 5 ms, or any other time duration) in which the set of SSBs are transmitted.

The base station may indicate a transmission periodicity of SSB via an RRC message (e.g., *ssb-Periodicity ServingCell* in *ServingCellConfigCommonSIB* of SIB 1 message, or *ServingCellConfigCommon* of a serving cell). A candidate value of the transmission periodicity may be in a range of {5ms, 10ms, 20ms, 40ms, 80ms, 160ms}. The transmission periodicity may have any other value. A maximum quantity/number of candidate SSBs ($L_{max}$) within an SSB burst may depend on a carrier frequency/band of the cell. For example, $L_{max}=4$ if $f_c<=3$GHz. $L_{max}=8$ if $3$GHz$<f_c<=6$GHz. $L_{max}=64$ if $f_c>=6$GHz, etc., wherein $f_c$ may be the carrier frequency of the cell. A starting OFDM symbol indicator/index, of a candidate SSB (e.g., occupying 4 OFDM symbols) within an SSB burst (e.g., comprised in a 5 ms time window), may depend on an SCS and a carrier frequency band of the cell.

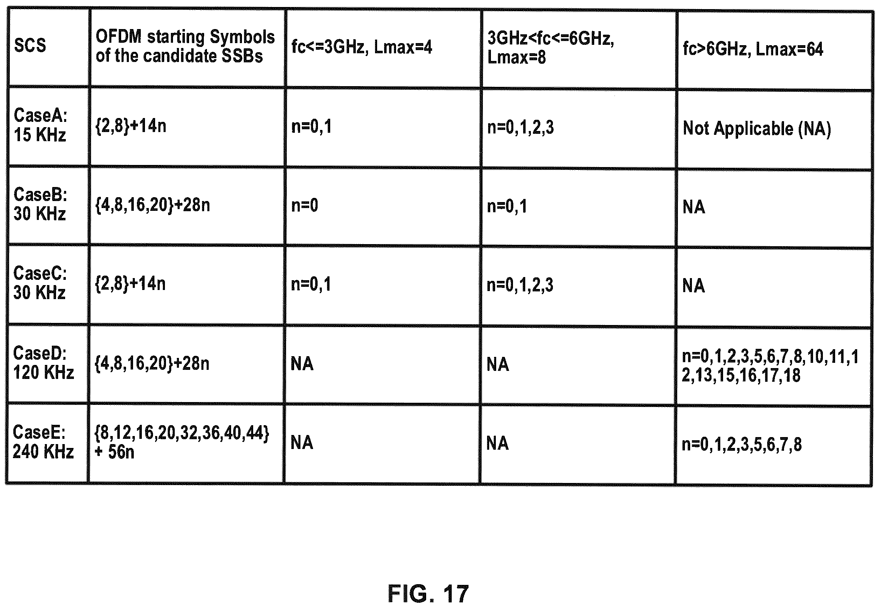

FIG. 17 shows an example of SSB configurations. FIG. 17 shows an example table for determination of a starting OFDM symbol index of candidate SSBs. OFDM starting symbols may be determined as a function of a SCS and carrier frequency. For example, starting OFDM symbol indexes of SSBs in an SSB burst, for a cell configured with 15 kHz SCS and carrier frequency $f_c$<3GHz (e.g., $L_{max}$=4), may be 2, 8, 16, and 22. OFDM symbols in a half-frame may be indexed with the first symbol of the first slot being indexed as 0. Starting OFDM symbol indexes of SSBs in an SSB burst, for a cell configured with 15 kHz and carrier frequency 3GHz<$f_c$<6GHz ($L_{max}$=8) may be 2, 8, 16, 22, 30, 36, 44 and 50. Starting OFDM symbol indexes for other SCSs and carrier frequencies may be similarly determined in accordance with the table shown in FIG. 17. The base station may send/transmit only one SSB by using the first SSB starting position, for example, if the base station is not transmitting the SSBs with beam forming.

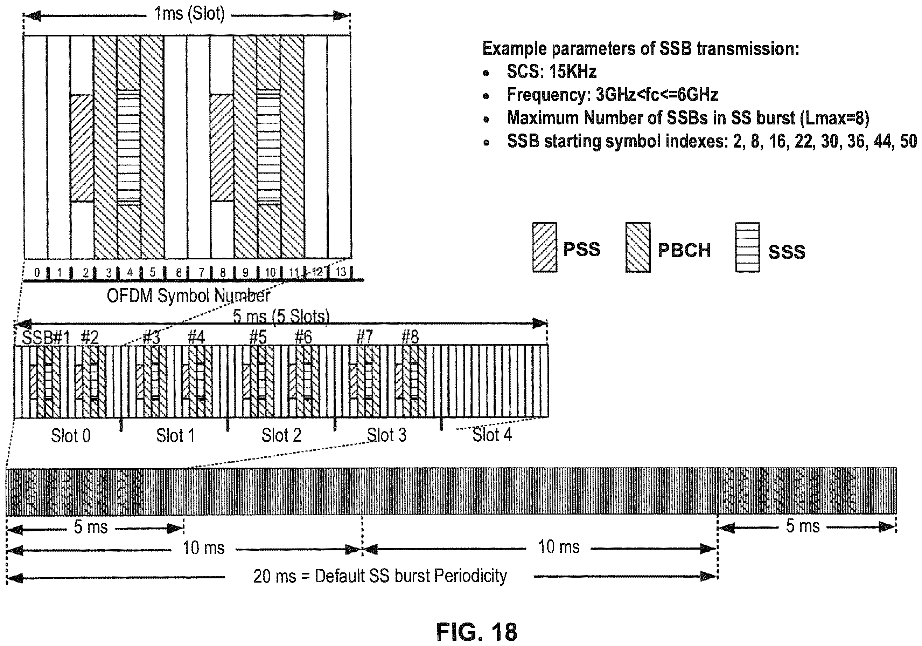

FIG. 18 shows an example of SSB transmissions. A maximum quantity of candidate SSBs in an SSB burst may be 8 ($L_{max}$=8), for example, based on the example of FIG. 17. Starting symbols for SSB transmission may be determined in accordance with the table shown in FIG. 17. SSB#1 may start at symbol 2 (of 70 symbols included in 5 ms half-frame), SSB#2 may start at symbol#8, SSB#3 may start at symbol#16, SSB#4 may start at symbol#22, SSB#5 may start at symbol#30, SSB#6 may start at symbol#36, SSB#7 may start at symbol#44, and SSB#8 may start at symbol 50. The SSB burst may be transmitted in the first half (and not the second half) of a radio frame (with 10 ms duration).

The SSB burst (and each SSB of the SSB burst) may be sent/transmitted with a periodicity. A default periodicity of an SSB burst may be 20 ms (e.g., as shown in FIG. 18, or any other duration of time). The default transmission periodicity may be a periodicity, for example, before a wireless device may receive a SIB1 message for initial access of the cell. For example, the base station, with 20 ms transmission periodicity of SSB (or SSB burst), may send/transmit the SSB burst in the first 5 ms of each 20 ms period. The base station may not send/transmit the SSB burst in the remaining 15 ms of the each 20 ms period.

A base station may send/transmit RRC messages (e.g., SIB1 messages and/or ServingCellConfigCommon IE) indicating cell specific configuration parameters of SSB transmission of a serving cell (e.g., a PCell or an SCell). The cell specific configuration parameters may comprise a value for a transmission periodicity (e.g., parameter *ssb-PeriodicityServingCell)* of an SSB burst and locations (e.g., presence) of SSBs (e.g., active SSBs), of a plurality of candidate SSBs, in the SSB burst. The plurality of candidate SSBs (e.g., starting symbols of candidate SSBs) may be determined as described with respect to FIG. 18. The cell specific configuration parameters may comprise a position indication of an SSB in an SSB burst (e.g., parameter *ssb-PositionsInBurst).* The position indication may comprise a first bitmap (e.g., *groupPresence*) and a second bitmap (e.g., *inOneGroup*) indicating locations/presence of SSBs in an SSB burst.

A base station may send (e.g., transmit) a Master Information Block (MIB) on/via PBCH, to indicate configuration parameters (for CORESET#0) for a wireless device that may monitor PDCCH to receive a SIB1 message. The base station may send (e.g., transmit) a MIB message with a transmission periodicity of 80 millisecond (ms). The same MIB message may be repeated (e.g., based on SSB periodicity) within the 80 ms. Contents of a MIB message may be the same over 80 ms period. The same MIB may be sent (e.g., transmitted) over all SSBs within a SS burst. For example, the PBCH may indicate that there is no associated SIB1, in which case a wireless device may be pointed to another frequency from where to search for an SSB that may be associated with a SIB 1, as well as a frequency range where the wireless device may assume no SSB associated with SIB1 is present. The indicated frequency range may be confined within a contiguous spectrum allocation of the same operator in which SSB may be detected.

A base station may send (e.g., transmit) a SIB1 message with a periodicity of 160 ms. The base station may send (e.g., transmit) the same SIB1 message with variable transmission repetition periodicity within 160 ms. The default transmission repetition periodicity of SIB1 may be 20 ms. The base station may determine an actual transmission repetition periodicity based on network implementation. SIB1 repetition transmission period may be 20 ms, for example, for SSB and CORESET multiplexing pattern 1. SIB1 transmission repetition period may be the same as the SSB period, for example, for SSB and CORESET multiplexing pattern 2/3. SIB1 may comprise information regarding the availability and/or scheduling (e.g., mapping of SIBs to SI message, periodicity, SI-window size) of other SIBs, an indication whether one or more SIBs are only provided on-demand and in which case, configuration parameters needed by a wireless device to perform an SI request.

A base station may send (e.g., transmit) SSBs over each serving cell (e.g., a PCell or an SCell) of multiple serving cells configured for a wireless device. The base station may send (e.g., transmit) SSBs over some serving cells of the multiple serving cells and may not send (e.g., transmit) SSBs over other serving cells of the multiple serving cells. A serving cell without SSBs may be referred to as an SSB-less serving cell. A serving cell with SSBs always sent (e.g., transmitted) by the base station may be referred to as an always-on SSBs serving cell.

In addition to always-on SSB and SSB-less, a base station may send (e.g., transmit) SSB over a serving cell based on indication from a wireless device, or from another base station, and/or triggered by the base station itself, for example, by sending (e.g., transmitting) an SCell activation/deactivation MAC CE. The base station may stop sending (e.g., transmitting) the SSB, for example, if there is no indication from the wireless device or from another base station or there is no trigger from the base station. The SSB sent/transmitted/stopped upon a request, or a triggering condition, may be referred to as on-demand SSBs or SSBs on-demand.

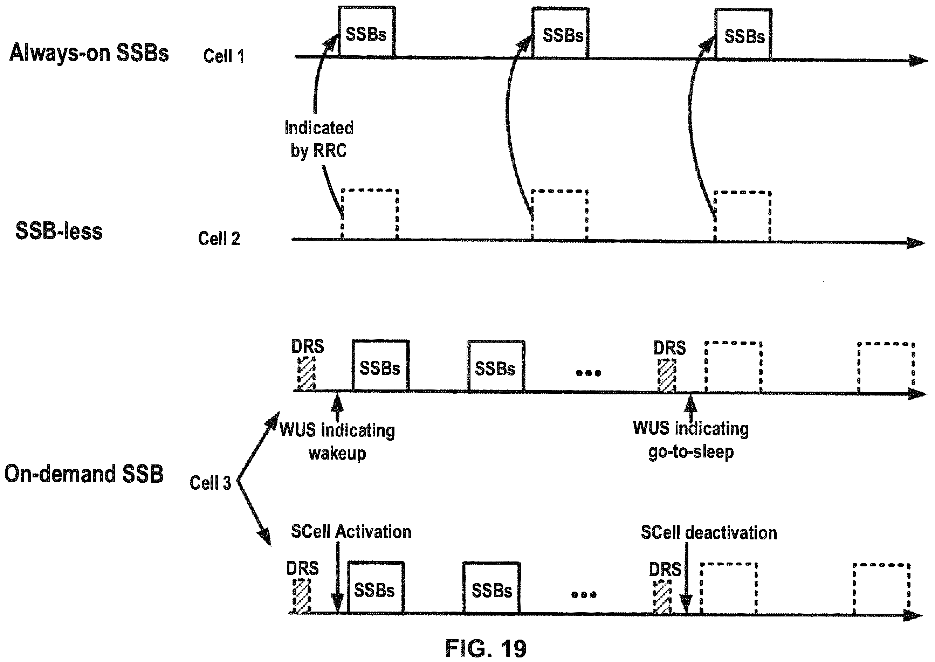

FIG. 19 shows examples of SSB transmissions. A base station may configure a serving cell (e.g., a PCell or an SCell, Cell 1 shown in FIG. 19) with always-on SSBs. The base station may keep sending (e.g., transmitting) the SSBs with periodicity (e.g., *ssb-PeriodicityServingCell*), for example, with always-on SSBs. The base station may keep sending (e.g., transmitting) the SSBs with periodicity (e.g., *ssb-PeriodicityServingCell*), for example, based on configuration parameters of the SSBs. The SSBs may be sent (e.g., transmitted) in a way that an SSB burst may comprise a number/quantity (e.g., indicated by *ssb-PositionsInBurst*) of SSBs. The SSB burst may be sent (e.g., transmitted) periodically according to the periodicity (e.g., as shown in FIG. 18). The always-on SSBs may be mandatorily configured on a PCell. The always-on SSBs may be optionally configured on an SCell. The wireless device may obtain time and/or frequency synchronization (and/or beam alignment) with the serving cell, for example, based on the periodically sent (e.g., transmitted) SSBs. Always sending (e.g., transmitting) SSBs may, for example, increase power consumption of the base station.

A base station may configure a serving cell (e.g., an SCell) without SSB transmission. A base station may configure a serving cell (e.g., an SCell, Cell 2 shown in FIG. 19) without SSB transmission, for example, for reducing power consumption of the serving cell. The wireless device may refer to another serving cell (e.g., a PCell, a PSCell, or an SCell, Cell 1 shown in FIG. 19) for obtaining time and/or frequency synchronization with this serving cell. The wireless device may use another reference signal for obtaining time and/or frequency synchronization with this serving cell. The serving cell (e.g., a PCell, a PSCell, or an SCell) used as the reference (e.g., an SSB reference cell) of SSBs of this serving cell may be configured by RRC messages (e.g., *ServingCellConfigCommon* IE) of the serving cell. The SSB reference cell may be intra-band (in the same frequency band) deployed with this serving cell or may be inter-band (in different frequency bands) deployed with this serving cell. Configuring a serving cell (e.g., an SCell) without SSB transmission may be referred to as an SSB-less configuration for a serving cell. The SSB-less configuration for a serving cell may be limited to cases, for example, when/if there is always an SSB reference cell in carrier aggregation (CA) or dual connectivity (DC) deployment. The SSB-less configuration for a serving cell may be limited to cases, for example, when/if the time/frequency synchronization error between the SSB reference cell and the serving cell is within a threshold. The SSB-less configuration for a serving cell may be limited to cases, for example, when/if the SSB reference cell and the serving cell are deployed in the same frequency range (FR). Allowing a serving cell without SSB transmissions, or with reduced SSB transmission (e.g., on-demand SSB), may, for example, reduce power consumption of the base station.

A base station may configure a serving cell (e.g., an SCell) with SSB transmissions. A base station may configure a serving cell (e.g., an SCell) with SSB transmissions, for example, based on a request (e.g., based on a triggering condition, on-demand). A base station may configure a serving cell (e.g., an SCell) with on-demand SSB transmissions. A base station may configure a serving cell (e.g., an SCell, Cell 3 shown in FIG. 19), for example, for, providing SSBs for time/frequency synchronization and/or parallelly reducing power consumption of the serving cell, especially if there is no SSB reference cell for this serving cell (e.g., due to a single cell deployment, or time/frequency synchronization error between the SSB reference cell and this serving cell being greater than the threshold). There may be multiple ways of providing the on-demand SSBs for this serving cell.

On-demand SSBs may be provided for a serving cell. The base station may trigger to send (e.g., transmit) the on-demand SSB, for example, based on receiving an uplink wake up signal (WUS) from a wireless device (e.g., as shown in FIG. 19). The WUS may be based on at least some wireless communications (e.g., a preamble, an SRS, a SR, etc.) and/or a signal designed specifically for the on-demand SSB request. The wireless device may trigger the transmission of the WUS, for example, based on traffic loading and/or power level of the wireless device. The wireless device may trigger the transmission of the WUS, for example, based on channel measurement of discovery reference signals (DRSs), if configured, of the serving cell. The DRS may be a simplified SSB with only PSS and without SSS and PBCH, a simplified SSB with only SSS and without PSS and PBCH, a low power SSB, a low power SSS, a low power PSS, a CSI-RS, a position RS, or any other RS specifically defined for the on-demand SSB request. The DRS may be a simplified SSB with only PSS and SSS (e.g., skipping PBCH). The DRS may be PSS and SSS on adjacent symbols (e.g., PSS then SSS with no symbol between them). The base station may (e.g., optionally) send (e.g., transmit) the DRSs, for example, before triggering the on-demand SSB for the serving cell. The base station may (e.g., optionally) send (e.g., transmit) the DRSs, for example, for facilitating the wireless device to perform the channel measurement. The wireless device may perform the channel measurement, for example, to determine if/whether to trigger the transmission of the WUS. The base station may start to send (e.g., transmit) the on-demand SSBs, for example, if receiving the WUS (e.g., indicating wakeup). The base station may stop (e.g., skip) sending (e.g., transmitting) the on-demand SSBs, for example, if receiving the WUS (e.g., indicating go-to-sleep) or not receiving the WUS indicating wakeup on a WUS occasion. Allowing the wireless device to request on-demand SSB transmissions (or request stopping the on-demand transmissions) may enable the base station to stop SSBs transmissions for power/energy saving, for example, when/if there is no wireless device active in this serving cell.

On-demand SSBs may be provided for a serving cell. The base station may trigger to send (e.g., transmit) the on-demand SSB, for example, by activating the SCell (e.g., as shown in FIG. 19). The base station may activate the SCell for a wireless device, for example, by sending (e.g., transmitting) an SCell activation/deactivation MAC CE. The base station may or may not skip sending (e.g., transmitting) the on-demand SSBs, for example, before the SCell is activated. The base station may start sending (e.g., transmitting) the on-demand SSBs, for example, after/when the SCell is activated. The base station may determine when/whether to activate the SCell (e.g., together with the on-demand SSB transmissions), for example, based on traffic load/request of wireless device(s) and/or requests from another base station via backhaul link. The DRSs described herein may be optionally sent (e.g., transmitted) by the base station. The wireless device may send (e.g., transmit) channel measurements of the serving cell, for example, based on the DRSs to help the base station to decide when/whether to activate the serving cell.

On-demand SSBs may be provided for a serving cell. The base station may trigger to send (e.g., transmit) the on-demand SSB, for example, by sending (e.g., transmitting) an indication to the wireless device. The base station may send the indication, for example, based on determining that the wireless device should perform one or more measurements. The base station may determine that the wireless device should perform one or more (e.g., some) measurements, for example, based on the SSBs (e.g., RRM measurements). The wireless device may receive the indication.

On-demand SSBs, or SSBs on-demand, may be used for energy saving. Energy saving may be referred to as network energy saving. A base station may use on-demand SSBs, or SSBs on-demand, for energy saving. A wireless device may use on-demand SSBs, or SSBs on demand, for energy saving.

The base station may send (e.g., transmit) the DRSs to the wireless device. The DRSs described herein may be sent (e.g., transmitted), for example, if the wireless device is in an RRC_IDLE or an RRC_INACTIVE mode/state. The base station may send (e.g., transmit) the DRSs to the wireless device, for example, if not sending (e.g., transmitting) the SSBs. The base station may send (e.g., transmit) the DRSs to the wireless device, for example, before the SCell is activated. The base station may send (e.g., transmit) the DRSs to the wireless device, for example, if the wireless device is in an RRC_IDLE or an RRC_INACTIVE mode/state. The base station may send (e.g., transmit) the SSBs on-demand. The base station may stop sending (e.g., transmitting) the DRSs, for example, if sending (e.g., transmitting) the SSBs on-demand.

The wireless device may receive the SSBs on-demand. The wireless device may receive the SSBs on-demand, for example, if in an RRC_CONNECTED mode/state. The base station may send (e.g., transmit) the SSBs on-demand to the wireless device. The base station may send (e.g., transmit) the SSBs on-demand, for example, based on a request or a trigger. The wireless device may request the SSBs on-demand, for example, by sending (e.g., transmitting) the request to the base station. The base station may trigger the SSBs on-demand and indicate the SSBs on-demand to the wireless device. The base station may send (e.g., transmit) the SSBs on-demand, for example, for a length (e.g., period, duration, window, and the like) of time (e.g., for 100 ms, 1 s, 10 s, or any other length of time). The length of time may be fixed or variable. The length of time may be requested by the wireless device and/or indicated by the base station, for example, if the length of time is variable/configurable. The base station may send (e.g., transmit) the SSBs on-demand, for example, until receiving (e.g., from a wireless device) a request for stopping the SSB transmissions and/or triggering stopping the SSB transmissions. The SSBs may be sent (e.g., transmitted) on demand, for example, by a PCell, an SCell, or any other serving cell capable of sending SSBs.

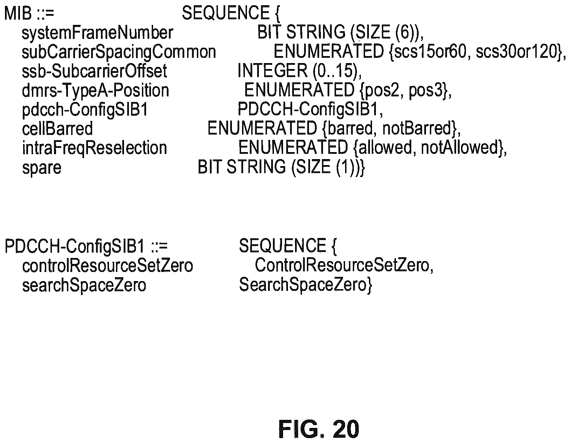

FIG. 20 shows an example MIB message. FIG. 20 shows example configuration parameters of a MIB of a cell. The cell may be a PCell, SCell, SpCell, non-serving cell, or any other cell. A wireless device may receive a MIB on/via a PBCH. Receiving the MIB on/via a PBCH may be referred to as obtaining/reading the MIB. The wireless device may receive the MIB, for example, based on receiving a PSS and/or an SSS. The configuration parameters of a MIB may comprise/indicate a SFN (e.g., indicated via a higher layer parameter *systemFrameNumber*), subcarrier spacing indication (e.g., indicated via a higher layer parameter *subCarrierSpacingCommon*), a frequency domain offset (e.g., indicated via a higher layer parameter *ssb-SubcarrierOffset*) between SSB and overall resource block grid in number of subcarriers, a parameter indicating whether the cell is barred (e.g., indicated via a higher layer parameter *cellBarred*), a DMRS position indication (e.g., indicated via a higher layer parameter *dmrs-TypeA-Position*) indicating position of DMRS, parameters of a CORESET and a search space of a PDCCH (e.g., indicated via a higher layer parameter *pdcch-ConfigSIB1*) comprising a common CORESET, a common search space and necessary PDCCH parameters, etc. Each of the higher layer parameters may be indicated via one or bits. For example, the SFN may be indicated using 6 bits (or any other quantity of bits).

The configuration parameters of the MIB may comprise one or more SSB parameters (e.g., *ssb-Subcαrrier-Offset*). The one or more SSB parameters may indicate one or more SSBs. The configuration parameters of the MIB may indicate information necessary for a wireless device to receive one or more additional configuration parameters. The one or more additional configuration parameters may indicate the one or more SSBs.

A configuration parameter (e.g., *pdcch-ConfigSIB1*) may comprise a first parameter (e.g., *controlResourceSetZero*) indicating a common CORESET of an initial BWP of the cell. The common CORESET may be associated with an indicator/index (e.g., 0, or any other indicator). For example, the common CORESET may be CORESET#0. The first parameter may be an integer between 0 and 15 (or any other integer). Each integer (e.g., between 0 and 15, or any other integer) may indicate/identify a configuration of CORESET#0.

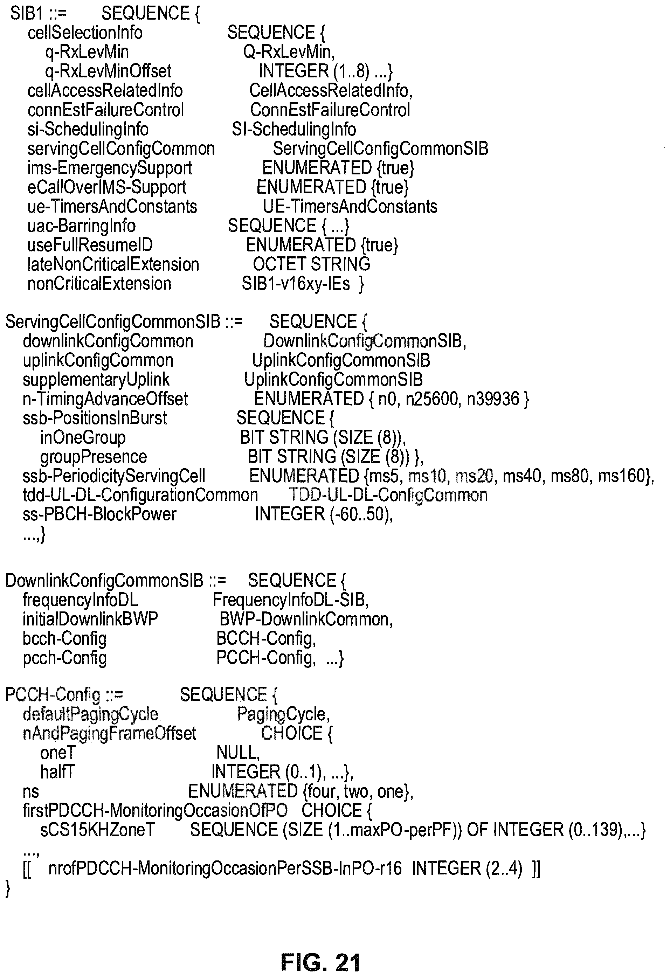

FIG. 21 shows an example of a SIB (e.g., SIB1) message. The SIB may comprise one or more configuration parameters (e.g., RRC configuration parameters). A SIB (e.g., SIB1) may be sent/transmitted to one or more wireless devices. For example, the SIB may be broadcasted to multiple wireless devices. The SIB may contain information for evaluating/determining whether a wireless device is allowed to access a cell, information of paging configuration, and/or scheduling configuration of other system information. A SIB may comprise radio resource configuration information that may be common for multiple wireless devices and barring information used/applied to a unified access control. A base station may send/transmit, to a wireless device (or a plurality of wireless devices), one or more SIB information messages. As shown in FIG. 21, parameters of the one or more SIB information messages may comprise: one or more parameters for cell selection related to a serving cell (e.g., *cellSelectionInfo*), one or more configuration parameters of a serving cell (e.g., in *ServingCellConfigCommonSIB* information element (IE)), and/or one or more other parameters. The one or more configuration parameters of a serving cell (e.g., *ServingCellConfigCommonSIB* IE) may comprise at least one of: common downlink parameters (e.g., in *DownlinkConfigCommonSIB* IE) of the serving cell, common uplink parameters (e.g., in *UplinkConfigCommonSIB* IE) of the serving cell, and/or other parameters.

The serving cell may comprise one or more configuration parameters. The one or more configuration parameters of a serving cell (e.g., *ServingCellConfigCommonSIB* IE) may comprise one or more configuration parameters of SSBs (e.g., *ssb-PositionsInBurst, ssb-PeriodicityServingCell*). The one or more configuration parameters of SSBs may indicate one or more SSBs.

A common downlink parameter information element (e.g., *DownlinkConfigCommonSIB* IE) may comprise parameters of an initial downlink BWP (e.g., indicated via *initialDownlinkBWP* IE) of the serving cell (e.g., SpCell). The parameters of the initial downlink BWP may be comprised in a *BWP-DownlinkCommon* IE. The *BWP-DownlinkCommon* IE may be used to configure common parameters of a downlink BWP of the serving cell. The base station may configure a parameter (e.g., *locationAndBandwidth*) such that the initial downlink BWP may comprise an entire CORESET (e.g., CORESET#0) of the serving cell in the frequency domain. The wireless device may use/apply the parameter *locationAndBandwidth* based on reception of the parameter. The wireless device may use/apply the parameter *locationAndBandwidth* to determine the frequency position of signals in relation to the frequency as indicated via *locationAndBandwidth*. The wireless device may keep CORESET#0, for example, until after reception of an RRC setup message (e.g., *RRCSetup*), RRC resume message (e.g., *RRCResume*), an RRC re-establishment message (e.g., *RRCReestablishment*), and/or an RRC reconfiguration message (e.g., *RRCReconfiguration*)

The common downlink parameter information element (e.g., *DownlinkConfigCommonSIB* IE) may comprise parameters of a paging channel configuration. The parameters may comprise a paging cycle value (T, e.g., indicated by *defaultPagingCycle* IE), a parameter indicating total quantity/number (N) of paging frames (PFs) (e.g., indicated by *nAndPagingFrameOffset* IE) and paging frame offset in a paging DRX cycle (e.g., indicated by parameter *PF_offset*), a quantity/number (Ns) for total paging occasions (POs) per PF, a first PDCCH monitoring occasion indication parameter (e.g., *firstPDCCH-MonitoringOccasionofPO* IE) indicating a first PDCCH monitoring occasion for paging of each PO of a PF. The wireless device may monitor a PDCCH for receiving a paging message, for example, based on parameters of a PCCH configuration.

A parameter (e.g.,*first-PDCCPI-MonitoringOccasionOfPO*) may be signaled in SIB1 for paging in initial DL BWP. The parameter *first-PDCCH-MonitoringOccasionOfPO* may be signaled in the corresponding BWP configuration, for example, for paging in a DL BWP other than the initial DL BWP.

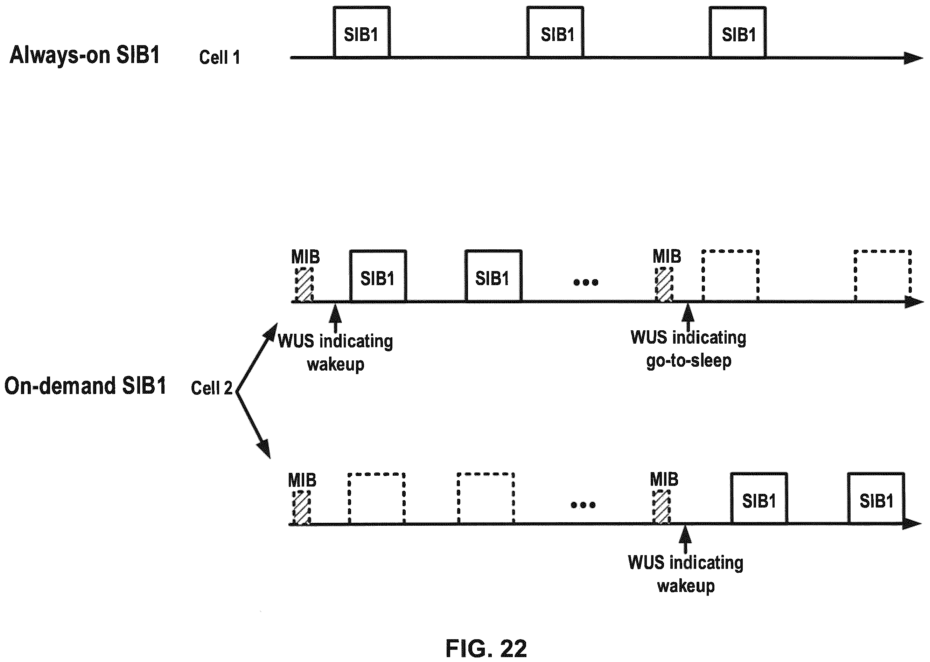

FIG. 22 shows an example of SIB1 transmissions. FIG. 22 shows an example of on-demand SIB1 transmissions (e.g., SIB1 for on-demand transmission). A base station may configure a serving cell (e.g., a PCell, Cell 2 shown in FIG. 22) with a SIB 1 for on-demand transmission, for example, for providing the SIB1 for the serving cell. A SIB1 for on-demand transmission may be referred to as an on-demand SIB 1. There may be multiple ways of providing the on-demand SIB1 for this serving cell.

The on-demand SIB1 may be provided for a serving cell. The base station may trigger to send (e.g., transmit) the on-demand SIB1, for example, based on receiving an uplink WUS from a wireless device (e.g., as shown in FIG. 22). The WUS may be based on at least some wireless communications (e.g., a preamble, an SRS, a SR, etc.) and/or a signal designed specifically for the on-demand SIB1 request. The wireless device may trigger the transmission of the WUS, for example, based on traffic loading and/or a power level of the wireless device. The wireless device may trigger the transmission of the WUS, for example, based on SSBs of the serving cell being measured at a received power (e.g., RSRP) stronger than a threshold value (e.g., indicated/configured by the base station). The base station may start to send (e.g., transmit) the on-demand SIB1, for example, if receiving the WUS (e.g., indicating wakeup). The base station may stop (e.g., skip or postpone) sending (e.g., transmitting) the on-demand SIB1, for example, if receiving the WUS (e.g., indicating go-to-sleep) or if not receiving the WUS indicating wakeup on a WUS occasion. Allowing the wireless device to request on-demand SIB1 transmissions, or request stopping the on-demand transmissions, may enable the base station to stop SIB 1 transmission for power/energy saving, for example, if the SIB1 transmission is not needed by a wireless device in the serving cell.

The on-demand SIB1 may be provided for a serving cell. The base station may trigger to send (e.g., transmit) the on-demand SIB1, for example, based on receiving an uplink WUS from a wireless device (e.g., as shown in FIG. 22). The base station may send (e.g., transmit) the on-demand SIB1 transmissions for a fixed or configurable length of time (e.g., for 10 ms, 100 ms, 1 s, or any other length of time), for example, after receiving the WUS from the wireless device. The base station may stop (e.g., skip, postpone, not send (e.g., transmit), or delay) the on-demand SIB1 transmissions, for example, after the fixed or configurable length of time. The base station may send (e.g., transmit) MIB, for example, even if not sending (e.g., transmitting) on-demand SIB1 transmissions. The MIB may comprise one or more parameters indicating the on-demand SIB1.

A wireless device may acquire (e.g., receive and/or decode) a MIB. A base station may send (e.g., transmit) the MIB to the wireless device. The base station may periodically broadcast the MIB. The MIB may comprise one or more configuration parameters (e.g., as shown in FIG. 20). The wireless device may acquire the MIB, for example, if in an RRC_IDLE or an RRC_INACTIVE state/mode. The wireless device may acquire the MIB, for example, if in an RRC_CONNECTED mode/state and a timer (e.g., a T311 timer) is running. The one or more configuration parameters (e.g., *ssb-SubcarrierOffset*) may indicate if a SIB1 is sent (e.g., transmitted) in a cell (e.g., broadcast). The MIB may be sent (e.g., transmitted) on the BCH (e.g., with a periodicity of 80 ms or any other length of time).

The wireless device may acquire a SIB1. The base station may send (e.g., transmit) the SIB1 to the wireless device. The SIB1 may be sent (e.g., transmitted) on the DL-SCH (e.g., with a periodicity of 160 ms or any other length of time). SIBs not comprising the SIB 1 or one or more positioning SIBs (posSIBs) may be called System Information (SI) messages. The base station may send (e.g., transmit) the SI messages to the wireless device. The wireless device may receive the SI messages from the base station. The SI messages may be sent (e.g., transmitted) on the DL-SCH. The SI messages (e.g., each SI message) may be associated with an SI-window. An SI message, of the SI messages, may be sent (e.g., transmitted), for example, within the associated SI-window. The SI-window may be a periodic time window (e.g., periodically repeated length of time).

The wireless device may acquire the MIB, the SIB1, and/or one or more SI messages of the SI messages for a cell. The wireless device may store the MIB, the SIB1, and/or the one or more SI messages. The stored MIB, the stored SIB1, and/or the stored one or more SI messages may be considered valid for a length of time (e.g., 3 hours). The wireless device may acquire (e.g., (re-)acquire) the MIB, the SIB1, and/or the one or more SI messages, for example, if the wireless device determines the MIB, the SIB1, and/or the one or more SI messages are invalid (e.g. no longer valid). The wireless device acquiring the MIB, the SIB 1, and/or the one or more SI messages may be referred to as an SI acquisition procedure.

The wireless device may receive an SI change (e.g., SI modification) indication. The base station may send (e.g., transmit) the SI change indication. The base station may send (e.g., transmit) a message indicating the SI change to the wireless device. The wireless device may receive the message. The message may be referred to as a short message. DCI may comprise/carry the short message. The DCI may be scrambled with P-RNTI. The base station may send (e.g., transmit) the DCI to the wireless device. The wireless device may receive the DCI. The DCI (e.g., carrying/comprising the short message) may be DCI format 1_0. The DCI may comprise one or more fields. The one or more fields may comprise a short message indicator. A value (e.g., 10) of the short message indicator may indicate the DCI comprises a short message (e.g., for SI change indication). The value (e.g., 10) of the short message indicator may indicate the DCI does not comprise one or more second fields. The wireless device may receive the short message, for example, based on the value of the field. The short message may comprise/be, for example, 8 bits or any other number of bits. The DCI may be longer than 8 bits (e.g., 15 or 20 bits), for example, if the DCI does not comprise a short message.

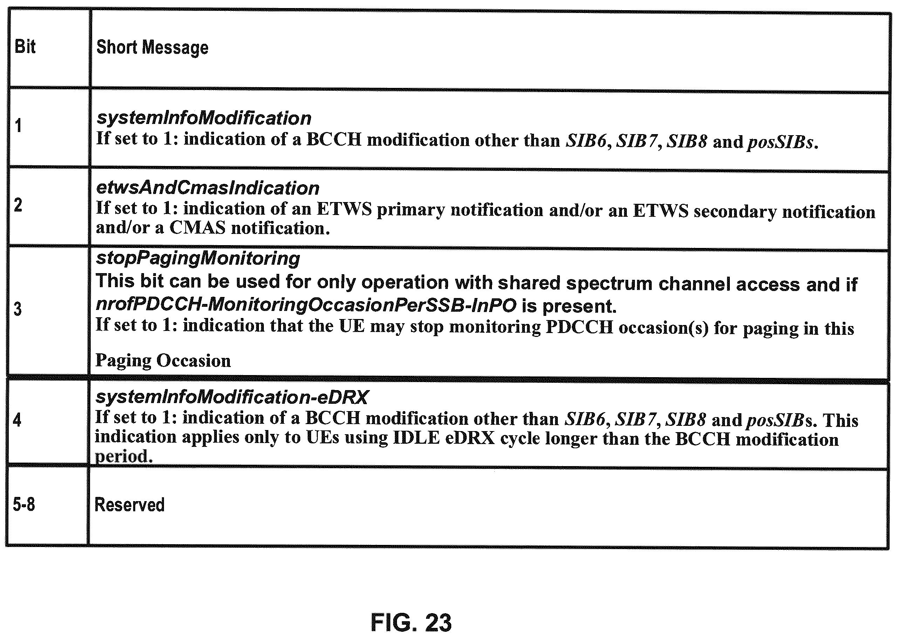

FIG. 23 shows an example of a short message. The short message (e.g., as shown in FIG. 23) may comprise one or more bit fields. A first bit field (e.g., bit 1, *systemInfoModification*) may indicate system information (e.g., BCCH) change/modification other than SIB6, SIB7, SIB8, or posSIBs if set to 1 (e.g., set). A second bit field (e.g., bit 2, *etwsAndCmasIndication*) may indicate a notification of emergency warning (e.g., ETWS and/or CMAS notification) if set to 1 (e.g., set). A third bit field (e.g., bit 3, *stopPagingMonitoring*) may be used for shared spectrum channel access (e.g., unlicensed band support). A fourth bit field (e.g., bit 4, *systemInfoModifcation-eDRX*) may indicate a modification/change in system information (e.g., BCCH) other than SIB6, SIB7, SIB8, or posSIBs if set to 1 (e.g., set). The fourth bit field may only use/apply to wireless devices using extended DRX (eDRX) cycles (e.g., Idle eDRX) longer than a modification period (e.g., a BCCH modification period).

A modification period may be a length of time (e.g., time window and/or time period). A modification period may be a length of time (e.g., time window and/or time period), for example, during which the SI messages may not be modified. The SI change indication may indicate the change in SI for a next modification period. A modification period may be referred to as a BCCH modification period. The SI change indication may be sent (e.g., transmitted), for example, during modification period n, to indicate the SI messages may be changed/modified in modification period n+1. The modification period may be indicated by one or more configuration parameters. The base station may send (e.g., transmit) the one or more configuration parameters indicating the modification period to the wireless device. The wireless device may receive the one or more configuration parameters indicating the modification period.

A wireless device may acquire (e.g., (re-)acquire) the SIB1. A wireless device may acquire (e.g., (re-)acquire) the SIB1, for example, during the next modification period, based on (e.g., in response to) receiving the SI change indication. The next modification period may be, for example, the modification period after (e.g., immediately following) the modification period during which the wireless device receives the SI change indication (e.g., the subsequent modification period).

A wireless device may be Earthquake and Tsunami Warning System (ETWS) and/or Commercial Mobile Alert Service (CMAS) capable (e.g., capable of receiving ETWS and/or CMAS messages). The base station may send (e.g., transmit) one or more ETWS and/or CMAS messages to the wireless device. The wireless device may receive the ETWS and/or CMAS messages.

A wireless device which is ETWS and/or CMAS capable may acquire (e.g., (re-)acquire) the SIB1. A wireless device which is ETWS and/or CMAS capable may acquire (e.g., (re-)acquire) the SIB1, for example, during the current modification period, based on (e.g., in response to) receiving the SI change indication. The current modification period may be, for example, the same modification period during which the wireless device receives the SI change indication.

A wireless device may be configured (e.g., indicated and/or scheduled) with an eDRX cycle (e.g., Idle eDRX). The eDRX cycle may be longer than the modification period. An eDRX acquisition period may be defined for the eDRX cycle. The eDRX acquisition period may be a time window (e.g., length of time and/or time period), for example, during which the wireless device acquires system information (e.g., the MIB, the SIB1, and/or the one or more SI messages).

A wireless device may acquire (e.g., (re-)acquire) the SIB1. A wireless device may acquire (e.g., (re-)acquire) the SIB1, for example, during the next eDRX acquisition period, based on (e.g., in response to) receiving the SI change indication. The next eDRX acquisition period may be, for example, the eDRX acquisition period after (e.g., immediately following) the eDRX acquisition period during which the wireless device receives the SI change indication (e.g., the subsequent eDRX acquisition period).

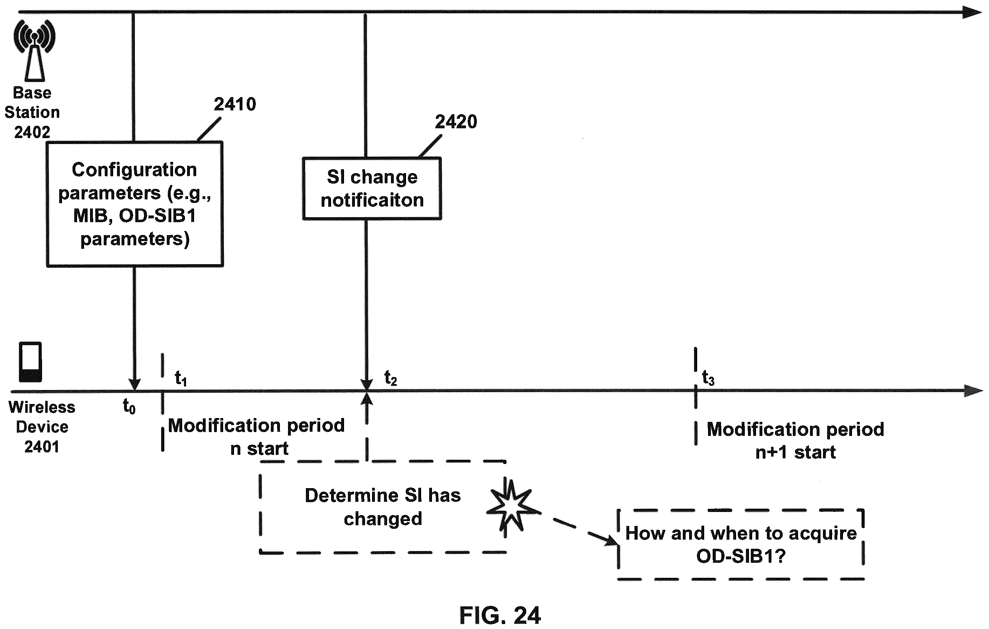

FIG. 24 shows an example of system information change notification. A wireless device 2401 may receive, from a base station 2402, one or more messages (e.g., RRC messages) comprising one or more configuration parameters (e.g., of a cell). The one or more configuration parameters may comprise configuration parameters 2410, for example, at (e.g., during and/or within) time (e.g., time interval) t0 shown in FIG. 24. A base station 2402 may send (e.g., transmit) the one or more configuration parameters to the wireless device 2401. The one or more messages may comprise a MIB. The one or more configuration parameters may indicate (e.g., configure and/or schedule) a SIB 1. The SIB1 may be an on-demand SIB1 (OD-SIB1). The OD-SIB1 may be referred to as a SIB1 for on-demand transmission and/or a SIB1 on-demand. The wireless device 2401 may acquire (e.g., (re-)acquire) the SIB1 (e.g., of the cell), for example, based on receiving the SIB1 for on-demand transmission. The base station 2402 may send (e.g., transmit) the SIB1, for example, for on-demand transmission to the wireless device 2401.

The one or more configuration parameters may indicate a PDCCH occasion (e.g., a PDCCH monitoring occasion). The wireless device 2401 may receive, on/via the PDCCH occasion (e.g., a PDCCH monitoring occasion), DCI scheduling (e.g., indicating and/or configuring) the SIB1. The base station 2402 may send (e.g., transmit) the DCI to the wireless device 2401. The wireless device 2401 may receive (e.g., acquire/re-acquire) the SIB 1, for example, based on receiving the DCI. The DCI may comprise one or more fields indicating the SIB 1.

The one or more configuration parameters may indicate a modification period. The one or more configuration parameters may comprise one or more modification period parameters. The one or more modification period parameters may indicate the modification period. The one or more modification period parameters may indicate a start time of the modification period (e.g., starting symbol, starting slot, starting frame, starting radio frame, etc.). The one or more modification period parameters may indicate a length (e.g., duration, time window, and the like) of the modification period. The one or more modification period parameters may comprise a paging cycle (e.g., *defaultPagingCycle*) and a scaling factor (e.g., *modificationPeriodCoeff*). The wireless device 2401 may determine the modification period, for example, based on the paging cycle and the scaling factor.

The wireless device 2401 may receive, from the base station 2402, an SI change notification 2420. In at least some examples, an SI change notification may be referred to as an SI change indication. A modification period (e.g., modification period n) may start, for example, at (e.g., on, in, and/or during) t1, as shown in FIG. 24. The base station 2402 may send (e.g., transmit) the SI change notification 2420, for example, at (e.g., on, in, and/or during) t2, as shown in FIG. 24. The wireless device 2401 may receive the SI change notification 2420. The base station 2402 may send (e.g., transmit) DCI comprising a message (e.g., a short message) indicating the SI change. The wireless device 2401 may receive the DCI from the base station 2402. The message may comprise one or more bit fields. The one or more bit fields may indicate an SI change (e.g., *systemInfoModification*), an emergency warning notification (e.g., *etwsAndCmasIndication*), and/or an SI change for eDRX (e.g., *systemInfoModification-eDRX*). One bit field of the one or more bit fields may indicate an SI change (e.g., modification of SI), for example, if set to a value (e.g., set to 1). An SI change may comprise a change/update (e.g., modification of information) of the MIB, the SIB1, and/or one or more SI messages. The base station 2402 may change

(e.g., modify and/or update) one or more configuration parameters of the MIB, of the SIB1 and/or of the one or more SI messages. The base station 2402 may send (e.g., transmit) the SI change notification 2420, for example, based on the change of the one or more configuration parameters (e.g., of the MIB, of the SIB1, and/or of the SI messages).

The wireless device 2401 may determine that the SI (e.g., the MIB, the SIB1, and/or the one or more SI messages) has changed (e.g., was modified). The wireless device 2401 may determine that the SI (e.g., the MIB, the SIB 1, and/or the one or more SI messages) has changed (e.g., was modified), for example, based on receiving the SI change notification 2420. The wireless device 2401 may determine the SI (e.g., the MIB, the SIB 1, and/or the one or more SI messages) has changed (e.g., was modified), for example, based on one or more fields in the message (e.g., short message) carrying the SI change notification 2420.

In at least some wireless communications, a wireless device 2401 may determine to acquire (e.g., (re-)acquire) the SIB1. The wireless device 2401 may determine to acquire (e.g., (re-)acquire) the SIB1, for example, based on receiving the SI change notification 2420. The wireless device 2401 may determine to acquire (e.g., (re-)acquire) the SIB1 (e.g., immediately/at once acquire (e.g., (re-)acquire) the SIB1), for example, if/when the wireless device 2401 is ETWS and/or CMAS capable. A second modification period (e.g., modification period n+1) may start, for example, at (e.g., on, in, and/or during) t3, as shown in Fig. 24. The wireless device 2401 may determine to acquire (e.g., (re-)acquire) the SIB 1, for example, starting from the next modification period (e.g., the modification period after the modification period where the SI change notification 2420 is received, the second modification period n+1 as shown in FIG. 24). The wireless device 2401 may determine to acquire (e.g., (re-)acquire) the SIB1, for example, starting from the next eDRX acquisition period (e.g., the eDRX acquisition period after the eDRX acquisition period where the SI change notification 2420 is received).

The SIB1 may be an OD-SIB1, a SIB1 for on-demand transmission, and/or an on-demand SIB1 (e.g., as discussed with respect to FIG. 22). The SIB1 may be sent (e.g., transmitted) by the base station 2402, for example, based on (e.g., in response to) receiving a WUS from the wireless device 2401. The wireless device 2401 may send (e.g., transmit) the WUS to request the SIB1 transmission. The base station 2402 may send (e.g., transmit) the SIB1, for example, during a time window (e.g., length of time, time period, and the like). The SIB1 may be referred to as active (e.g., non-dormant and/or enabled), for example, if the base station 2402 sends (e.g., transmits) the SIB1 (e.g., during the time window). The base station 2402 may reduce energy consumption (e.g., save power/energy), for example, based on sending (e.g., transmitting) the SIB1 (e.g., compared with always broadcasting SIB1) during certain times (e.g., time windows) and not sending (e.g., transmitting) the SIB1 in other times (e.g., other time windows). The base station 2402 may not send (e.g., transmit) (e.g., skip, ignore, delay, postpone, cancel, and the like) the SIB 1, for example, during a second time window (e.g., length of time, time period, and the like). The SIB1 may be referred to as inactive, for example, if the base station 2402 does not send (e.g., transmit) SIB1 (e.g., during the second time window). The base station 2402 may configure (e.g., indicate and/or schedule) the SIB1 to the wireless device 2401. The second time window may be, for example, for energy saving.

The wireless device 2401 may not receive the SIB 1. The wireless device 2401 may not receive the SIB 1, for example, during the second time window. A wireless device may consider a cell as barred (e.g., unavailable for access), for example, based on an inability to acquire the SIB1 (e.g., of the cell). At least some wireless communications may not be efficient if the wireless device 2401 determines to acquire (e.g., (re-)acquire) the SIB1, for example, based on receiving the SI change notification, and if the base station 2402 configures (e.g., indicates) the SIB1 for on-demand transmission. The wireless device 2401 may receive the SI change notification 2420, for example, during the second time window (e.g., where the SIB1 is not sent (e.g., transmitted) by the base station 2402). The wireless device 2401 may not be able to determine, for example, when to receive the SIB1. It may be unclear if/whether the wireless device 2401 determines to acquire (e.g., (re-)acquire) the SIB 1, for example, prior to a next modification period (e.g., before modification period n+1 in FIG. 24) or after the start of the next modification period. The wireless device being unable to determine when to receive the SIB1 may lead to, for example, inefficient power saving for the base station 2402, loss of access by the wireless device 2401 (e.g., due to considering the cell barred), inefficient power saving for the wireless device 2401, extra overhead for the wireless device 2401, and/or additional latency for the wireless device 2401 (e.g., higher latency before acquiring the SIB1).

Examples described herein may include improved methods for acquiring (e.g., (re-)acquiring) system information. Examples described herein may include improved methods for acquiring (e.g., (re-)acquiring) system information, for example, if system information change occurs and SIB for on-demand transmission is configured (e.g., indicated and/or scheduled) by the base station. The wireless device may acquire (e.g., (re-)acquire) the system information (e.g., SIB1), for example, during a time window. The wireless device may acquire (e.g., (re-)acquire) the system information (e.g., SIB1), for example, based on receiving a message indicating SI change (e.g., SI change notification) and one or more configuration parameters indicating the SIB1 for on-demand transmission. The system information (e.g., SIB1) (for on-demand transmission) may be active, for example, during the time window.

The examples described herein may lead to improvements such as increased power saving for the base station (e.g., due to reduced signaling for SIB1 activation/transmission), increased power saving for the wireless device (e.g., due to efficient reception/acquisition of the SIB1), decreased overhead for the wireless device (e.g., due to reduced signaling for SIB1 activation/transmission), retaining access to the cell (e.g., due to not considering the cell as barred), and/or reduced latency for the wireless device (e.g., due to lower time delay before acquiring the SIB 1).

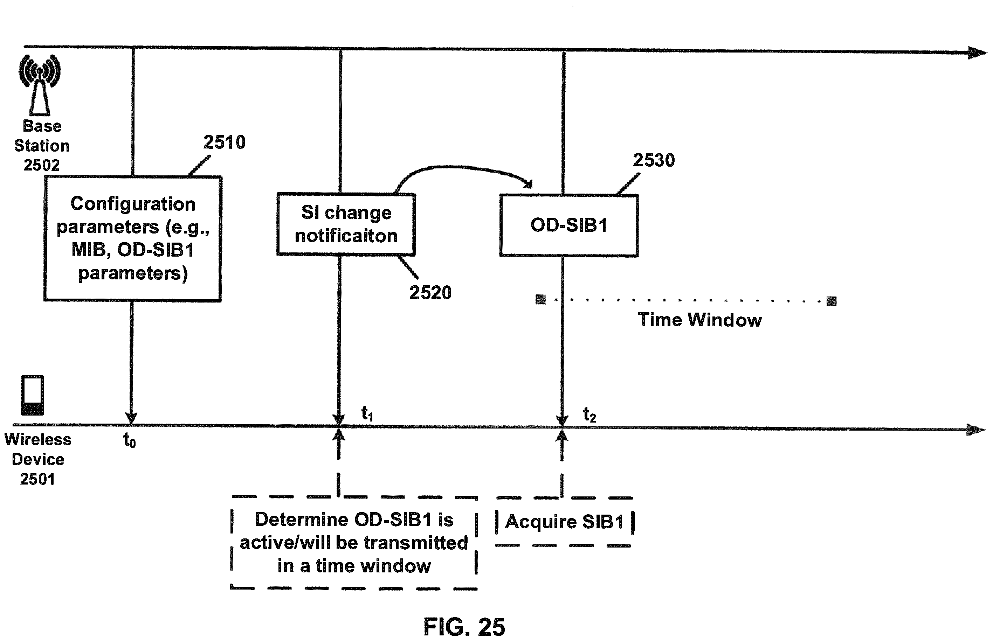

FIG. 25 shows an example of energy saving in wireless communication systems. A wireless device 2501 may receive one or more messages (e.g., RRC message(s)), for example, at (e.g., on, in, and/or during) t0 as shown in FIG. 25. A base station 2502 may send (e.g., transmit) the one or more messages to the wireless device 2501. The wireless device 2501 may receive the one or more messages from a relay node. The wireless device 2501 may receive the one or more messages from another wireless device (e.g., TRP, vehicle, RRH, satellite, drone, and the like). The one or more messages may be one or more RRC messages (e.g., RRC setup messages, RRC reconfiguration messages, RRC release messages, and the like). The one or more messages may comprise one or more configuration parameters. The one or more configuration parameters may comprise configuration parameters 2510, for example, at (e.g., during and/or within) time (e.g., time interval) t0 as shown in FIG. 25. The one or more configuration parameters may be RRC configuration parameter(s). The one or more configuration parameters may be RRC reconfiguration parameter(s). The wireless device 2501 may receive the one or more messages on/via one or more RRC messages. The wireless device 2501 may receive the one or more messages on/via one or more MAC CEs or control channels (e.g., DCIs). The wireless device 2501 may be in an RRC connected state/mode or an RRC inactive/idle mode/state.

The one or more configuration parameters may be for (e.g., configured/indicated for) one or more cells and/or one or more carriers of a cell. The one or more cells may comprise a cell. The cell may be a serving cell. At least one configuration parameter of the one or more configuration parameters may be for the cell. The cell may be a Pcell. The cell may be an Scell. The cell may be a secondary cell configured with PUCCH (e.g., PUCCH Scell). The cell may be a special Cell (SpCell). The SpCell may refer to (e.g., indicate) the Pcell of the MCG or the PSCell of the SCG, for example, for DC operation. The SpCell may refer to (e.g., indicate) the Pcell, for example, if not for DC operation. The cell may be a primary SCG cell (PSCell). The wireless device 2501 may perform a random-access procedure on/via the PSCell, for example if/when performing the Reconfiguration with Sync procedure for DC operation.

The cell may be a non-serving cell (e.g., a neighbor cell, a target cell, or a candidate cell). The cell may be a layer 1/layer 2 triggered mobility (LTM) candidate cell. The cell may be a candidate cell for an LTM procedure. The cell may be a target cell for an LTM procedure. The cell may be an LTM target cell. The cell may be an LTM candidate cell. The cell may be a non-terrestrial network (NTN) cell.

The cell may operate in one or more bands. The cell may be an unlicensed cell, for example, operating in an unlicensed band (e.g., a shared spectrum). The cell may be a licensed cell, for example, operating in a licensed band. The cell may operate in a first frequency range (FR1). The FR1 may comprise frequency bands, for example, below 6 GHz. The cell may operate in a second frequency range (FR2). The FR2 may comprise frequency bands, for example, from 24 GHz to 52.6 GHz. The cell may operate in a third frequency range (FR3). The FR3 may comprise frequency bands, for example, from 52.6 GHz to 71 GHz. The FR3 may comprise frequency bands, for example, starting from (e.g., above) 52.6 GHz.

The wireless device 2501 may perform uplink transmissions and downlink receptions. The wireless device 2501 may perform uplink transmissions (e.g., PUSCH, PUCCH, SRS, PRACH) via/of the cell, for example, at (e.g., in, during, and/or within) a first time (e.g., occasion, interval, subframe/slot/symbol, or the like) and in a first frequency (e.g., resource). The wireless device 2501 may perform downlink receptions (e.g., PDCCH, PDSCH) via/of the cell, for example, at (e.g., in, during, and/or within) a second time and in a second frequency. The cell may operate in a time-division duplex (TDD) mode (e.g., unpaired channel access/mode). The first frequency and the second frequency may be the same, for example, in the TDD mode. The first time and the second time may be different, for example, in the TDD mode. The cell may operate in a frequency-division duplex (FDD) mode (e.g., paired channel access/mode). The first frequency and the second frequency may be different, for example, in the FDD mode. The first time and the second time may be the same, for example, in the FDD mode.

The wireless device 2501 may be in one of a plurality of RRC states/modes. The wireless device 2501 may be in an RRC connected mode. The wireless device 2501 may be in an RRC idle mode. The wireless device 2501 may be in an RRC inactive mode.

The cell may comprise a plurality of BWPs. The plurality of BWPs may be configured by the one or more configuration parameters. The plurality of BWPs may comprise one or more uplink BWPs comprising an uplink BWP (e.g., active BWP) of the cell. The plurality of BWPs may comprise one or more downlink BWPs comprising a downlink BWP (e.g., active BWP) of the cell.

A BWP of the plurality of BWPs may be in one of an active state and an inactive (e.g., dormant) state. The wireless device 2501 may monitor a downlink channel/signal (e.g., PDCCH, DCI, CSI-RS, PDSCH) on/via/for the downlink BWP, for example, in the active state of a downlink BWP of the one or more downlink BWPs. The wireless device 2501 may receive a PDSCH on/via/for the downlink BWP, for example, in the active state of a downlink BWP of the one or more downlink BWPs. The wireless device 2501 may not monitor a downlink channel/signal (e.g., PDCCH, DCI, CSI-RS, PDSCH) on/via/for the downlink BWP, for example, in the inactive state of a downlink BWP of the one or more downlink BWPs. The wireless device 2501 may stop monitoring (e.g., receiving) a downlink channel/signal (e.g., PDCCH, DCI, CSI-RS, PDSCH) on/via/for the downlink BWP, for example, in the inactive state of a downlink BWP of the one or more downlink BWPs. The wireless device 2501 may not receive a PDSCH on/via/for the downlink BWP, for example, in the inactive state of a downlink BWP of the one or more downlink BWPs. The wireless device 2501 may stop receiving a PDSCH on/via/for the downlink BWP, for example, in the inactive state of a downlink BWP of the one or more downlink BWPs.

The wireless device 2501 may send (e.g., transmit) an uplink channel/signal or may not send (e.g., transmit) an uplink channel/signal. The wireless device 2501 may send (e.g., transmit) an uplink signal/channel (e.g., PUCCH, preamble, PUSCH, PRACH, PUCCH, etc.) on/via the uplink BWP, for example, in the active state of an uplink BWP of the one or more uplink BWPs. The wireless device 2501 may not send (e.g., transmit) an uplink signal/channel (e.g., PUCCH, preamble, PUSCH, PRACH, PUCCH, etc.) on/via the uplink BWP, for example, in the inactive state of an uplink BWP of the one or more uplink BWPs.

The wireless device 2501 may activate the downlink BWP of the one or more downlink BWPs of the cell. Activating the downlink BWP may comprise setting (e.g., switching to) the downlink BWP as an active downlink BWP of the cell. The activating the downlink BWP may comprise setting the downlink BWP in the active state. The activating the downlink BWP may comprise switching the downlink BWP from the inactive state to the active state.

The wireless device 2501 may activate the uplink BWP of the one or more uplink BWPs of the cell. Activating the uplink BWP may comprise setting (e.g., switching to) the uplink BWP as an active uplink BWP of the cell, for example, by the wireless device 2501. The activating the uplink BWP may comprise setting the uplink BWP in the active state. The activating the uplink BWP may comprise switching the uplink BWP from the inactive state to the active state.

The one or more configuration parameters may be for the BWP (e.g., downlink BWP and/or uplink BWP) of the cell. The one or more configuration parameters may be for the downlink BWP (e.g., active BWP) of the cell. At least one configuration parameter of the one or more configuration parameters may be for the downlink BWP of the cell. The one or more configuration parameters may be for the uplink BWP (e.g., active BWP) of the cell. At least one configuration parameter of the one or more configuration parameters may be for the uplink BWP of the cell.

The one or more configuration parameters may indicate (e.g., as described with respect to FIG. 24) a MIB, a SIB1 for on-demand transmission (e.g., OD-SIB1), and/or a modification period. The MIB may indicate one or more parameters of the SIB1 for on-demand transmission. The one or more configuration parameters may comprise one or more SIB 1 parameters. The one or more SIB 1 parameters may indicate the SIB 1 for on-demand transmission.

The one or more SIB1 parameters may indicate a time resource of the SIB 1. The time resource of the SIB1 may comprise a time duration (e.g., length of time, time window, and the like), for example, during which the SIB1 for on-demand transmission is sent (e.g., transmitted) (e.g., time length during which the SIB1 is active). The one or more SIB1 parameters may indicate a frequency resource of the SIB 1. The one or more SIB 1 parameters may indicate a WUS for the SIB 1.

The one or more configuration parameters may indicate the WUS for the SIB1. The one or more configuration parameters may comprise one or more WUS parameters. The one or more WUS parameters may indicate the WUS. The one or more WUS parameters may indicate a time resource of the WUS. The one or more WUS parameters may indicate a frequency resource of the WUS. The one or more WUS parameters may indicate a sequence of the WUS.

The one or more configuration parameters may indicate one or more paging occasions for the wireless device 2501. The wireless device 2501 may monitor the one or more paging occasions. The base station 2502 may send (e.g., transmit) messages to the wireless device 2501 via the one or more paging occasions. The base station 2502 may send (e.g., transmit) a DCI format 1_0 via a paging occasion of the one or more paging occasions to the wireless device 2501. The DCI format 1_0 may comprise a short message. The wireless device 2501 may receive the short message (e.g., carried in DCI format 1_0) via the one or more paging occasions.

The wireless device 2501 may receive, from the base station 2502, an SI change notification. The wireless device 2501 may receive an SI change notification 2520, for example, at (e.g., on, in, and/or during) t1, as shown in FIG. 25 (e.g., as described with respect to FIG. 24). The base station 2502 may send (e.g., transmit) the SI change notification 2520 to the wireless device 2501. The wireless device 2501 may determine to acquire (e.g., re-)acquire) the SIB 1, for example, based on the SI change notification 2520. The wireless device 2501 may determine the SIB 1 (e.g., SIB1 for on-demand transmission, or OD-SIB1) is active, for example, based on (e.g., in response to) the SI change notification 2520. The SI change notification 2520 may comprise one or more fields. The wireless device 2501 may determine the SIB 1 is active, for example, based on (e.g., in response to) the one or more fields (e.g., based on a value of the one or more fields). The wireless device 2501 may determine a time window, for example, based on

(e.g., in response to) the SI change notification 2520. The SIB1 may be active, for example, during the time window.

The one or more fields may indicate if/whether to send (e.g., transmit) or skip a WUS transmission. The wireless device 2501 may determine to skip (e.g., not send (e.g., transmit), delay, postpone, ignore, and/or cancel) a WUS transmission, for example, based on the one or more fields (e.g., based on a value in the one or more fields).

The wireless device 2501 may determine the time window. The wireless device 2501 may determine the time window, for example, based on (e.g., in response to) the one or more fields of the SI change notification 2520. The one or more fields may indicate a start time of the time window, an end time of the time window, and/or a duration of the time window. The start time of the time window may be a starting slot, a starting symbol, a starting frame, a starting subframe, and/or a starting hyper-frame. The end time of the time window may be an ending slot, an ending symbol, an ending frame, an ending subframe, and/or an ending hyper-frame. The duration of the time window may be a number/quantity of slots, a number/quantity of symbols, a number/quantity of frames, a number/quantity of subframes, a number/quantity of modification periods, and/or a number/quantity of hyper-frames.

The one or more configuration parameters may indicate the time window. The wireless device 2501 may determine the time window, for example, based on the time the SI change notification 2520 is received (e.g., t1 as shown in FIG. 25). The wireless device 2501 may determine the time window, for example, based on an offset (e.g., indicated by the SI change notification 2520 and/or the one or more configuration parameters). The offset may, be a number/quantity of slots, subframes, symbols, frames, and/or hyper-frames. The wireless device 2501 may calculate the start of the time window, for example, based on the offset and the time the SI change notification is received.

The wireless device 2501 may acquire (e.g., (re-)acquire) the SIB1 (e.g., OD-SIB1). The wireless device 2501 may acquire (e.g., (re-)acquire) the SIB1 (e.g., OD-SIB1 2530), for example, at (e.g., on, during, and/or in) t2, as shown in FIG. 25. The base station 2502 may send (e.g., transmit) the SIB1 (e.g., on-demand, OD-SIB1 2530) to the wireless device 2501. The wireless device 2501 may acquire (e.g., (re-)acquire) the SIB1, for example, during the time window, based on receiving the SI change notification 2520 and the one or more configuration parameters (e.g., configuration parameters 2510 as shown in FIG. 25) indicating the SIB1 for on-demand transmission. The wireless device 2501 may acquire (e.g., (re-)acquire) the SIB1, for example, during the time window, based on receiving the message (e.g., short message) indicating the SI change and the one or more configuration parameters indicating the SIB 1 for on-demand transmission. The wireless device 2501 may acquire (e.g., (re-)acquire) the SIB1, for example, during the time window, based on the one or more fields indicating the SI change and the one or more configuration parameters indicating the SIB1 for on-demand transmission. The time window may be, for example, during a modification period. The modification period may be the same as, for example, a modification period during which the SI change notification 2520 is received.

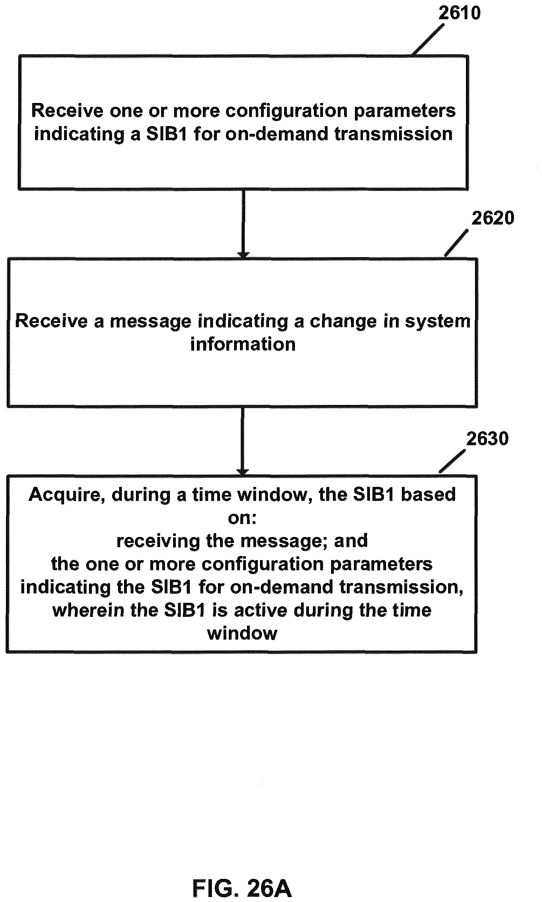

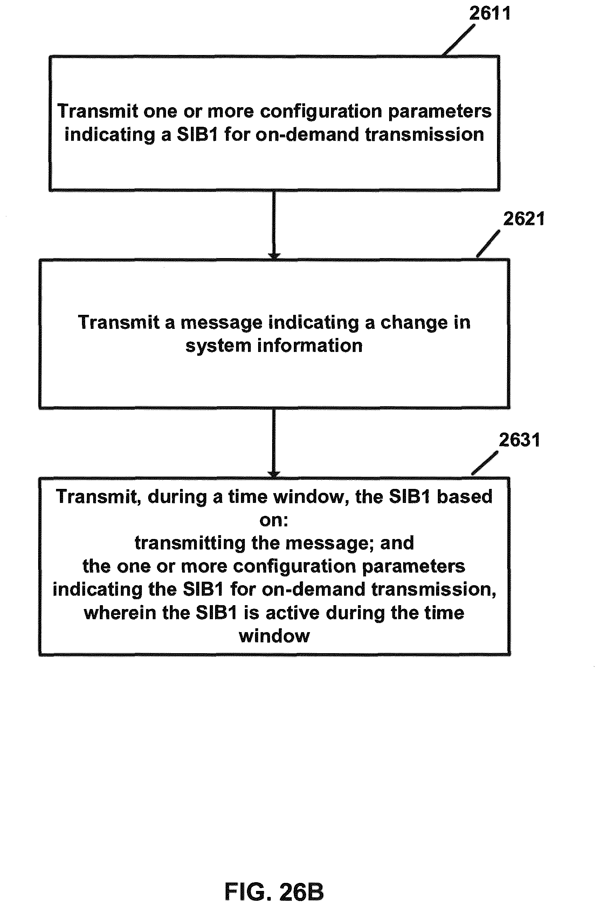

FIG. 26A and FIG. 26B show example methods of energy saving in a wireless communication system. A wireless device may receive one or more messages (e.g., RRC messages, RRC reconfiguration message, RRC resume message, and the like) comprising one or more configuration parameters, as shown at step 2610 in FIG. 26A. Configuration parameters may refer to RRC configuration parameters, RRC reconfiguration parameters, or MAC-CE parameters. A base station may send (e.g., transmit), to the wireless device, the one or more messages comprising the one or more configuration parameters, as shown at step 2611 in FIG. 26B. The one or more configuration parameters may indicate (e.g., configure, trigger, and/or schedule) a SIB1 for on-demand transmission. SIB1 for on-demand transmission may refer to on-demand SIB1, SIB1 on-demand, or non-broadcast SIB1. The one or more configuration parameters may indicate a WUS (e.g., WUS for on-demand SIB1 request) and/or a modification period (e.g., modification period of/for system information). The WUS may comprise/be a PRACH transmission.

The wireless device may receive a message indicating a change in system information, as shown at step 2620 in FIG. 26A. The change in system information may be referred to as an SI change (e.g., modification) indication and/or an SI change (e.g., modification) notification. The base station may send (e.g., transmit) the message indicating the change in system information (e.g., SI change indication/notification) to the wireless device, as shown at step 2621 in FIG. 26B. The wireless device may be in an RRC inactive state/mode, for example, while/if receiving the message. The wireless device may be in an RRC idle state/mode, for example, while/if receiving the message.

The wireless device may be in an RRC connected state/mode. The wireless device may be in an RRC connected state/mode, for example, while/if receiving the message. The message may be a short message (e.g., paging message, DCI format 1_0). The base station may send (e.g., transmit) DCI to the wireless device. The wireless device may receive the DCI. The DCI may be sent (e.g., transmitted) and/or received on/via a PDCCH occasion. The PDCCH occasion may comprise/be a paging occasion. The one or more configuration parameters may indicate (e.g., schedule, trigger, and/or configure) the paging occasion. The DCI may comprise/be a DCI format 1_0. The DCI may comprise/be the short message. The DCI may comprise one or more fields. The one or more fields (of the DCI) may indicate the DCI comprises the short message.

The short message may comprise one or more bit fields. The one or more bit fields may indicate the SI change indication. The DCI may indicate the SI change indication. The short message may indicate the SI change indication.

The wireless device may acquire the SIB1. The wireless device may acquire the SIB1, for example, during a time window, as shown at step 2630 in FIG. 26A. The base station may send (e.g., transmit) the SIB to the wireless device, as shown at step 2631 in FIG. 26B. The wireless device may acquire, during the time window, the SIB1, for example, based on receiving the message and the one or more configuration parameters indicating the SIB1 for on-demand transmission. The SIB1 may be active, for example, during the time window. The wireless device may acquire, during the time window, the SIB 1, for example, based on the SIB 1 being active during the time window. The wireless device may determine the SIB1 is active (e.g., during the time window), for example, based on receiving the message. The message may indicate the SIB 1 is active, for example, during the time window. The SI change indication may indicate the SIB1 is active, for example, during the time window. The one or more configuration parameters may indicate the time window.

The SIB1 may be active or the SIB1 may be inactive. The SIB1 being active may comprise the SIB 1 being sent (e.g., transmitted) by the base station. The SIB1 being inactive (e.g., not active and/or deactivated) may comprise the SIB1 not being sent (e.g., transmitted) (e.g., skipped, canceled, postponed, delayed, and the like) by the base station. A time window for energy saving may refer to a time interval for energy saving, a time period for energy saving, a time duration for energy saving, a length of time for energy saving, an SIB1 off period, a SIB1 inactive, or an on-demand SIB1 off period. The wireless device may receive the SIB1 (e.g., on-demand), for example, if the SIB1 is active (e.g., being sent (e.g., transmitted) by the base station). The wireless device may not receive the SIB 1, for example, if the SIB 1 is inactive (e.g., not active and/or deactivated). The SIB1 being active may be referred to as the SIB1 being sent (e.g., transmitted) on-demand. The SIB1 may be sent (e.g., transmitted) (e.g., on-demand), for example, during the time window.

The wireless device may determine the SIB1 is active. The wireless device may determine the SIB1 is active, for example, based on the message (e.g., short message). The wireless device may determine the SIB1 is active (e.g., being sent (e.g., transmitted) by the base station), for example, based on receiving the message and the one or more configuration parameters indicating the SIB1 for on-demand transmission. The one or more bit fields may indicate the SIB1 is active. The wireless device may determine the SIB1 is active (e.g., being sent (e.g., transmitted) by the base station, non-dormant, and/or enabled), for example, based on the receiving the SI change indication.

The wireless device may receive the message (e.g., short message indicating SI change). The wireless device may receive the message (e.g., short message indicating the SI change), for example, during a first modification period. The time window may be, for example, during the first modification period. The wireless device may receive/acquire the SIB1, for example, during the first modification period.

The wireless device may not support an ETWS capability and an CMAS capability. The wireless device may send (e.g., transmit) one or more capability messages indicating lack of support of the ETWS capability and the CMAS capability. The base station may receive the one or more capability messages from the wireless device. The wireless device may receive the SIB1, for example, during the first modification period, if (e.g., even if) the wireless device does not support the ETWS and CMAS capabilities. The wireless device may receive the SIB 1, for example, during the first modification period, based on receiving the message and if (e.g., even if) the wireless device does not support the ETWS and CMAS capabilities.

The wireless device may skip (e.g., not send (e.g., transmit), delay, postpone, cancel, and the like) a WUS transmission. The wireless device may skip (e.g., not send (e.g., transmit), delay, postpone, cancel, and the like) the WUS transmission, for example, based on (e.g., in response to) receiving the message (e.g., short message) indicating the SI change (e.g., SI change notification/indication). An SI change notification may refer to an SI change indication, an indication of SI change, a notification of SI change, an SI modification, or an SI modification indication. The wireless device may skip (e.g., not send (e.g., transmit), delay, postpone, cancel, and the like) the WUS transmission, for example, based on (e.g., in response to) the one or more fields of the message. The one or more fields may indicate if/whether to skip the WUS transmission.

A bit field (e.g., of the one or more bit fields) of the short message may indicate if/whether to skip the WUS transmission. The bit field having a first value (e.g., 0, 1) may indicate to skip the WUS transmission. The wireless device may deactivate/disable the WUS, for example, based on (e.g., in response to) the bit field (e.g., the value of the bit field). The bit field having a second value (e.g., 1, 0) may indicate to not skip (e.g., send (e.g., transmit)) the WUS transmission. The wireless device may send (e.g., transmit) the WUS, for example, based on (e.g., in response to) the bit field. The wireless device may send (e.g., transmit) the WUS, for example, based on (e.g., in response to) the short message and the SI change notification/indication. The base station may receive the WUS from the wireless device. The indication whether to skip the WUS transmission may be for a SIB1 acquisition (e.g., (re-)acquisition). The SIB1 acquisition may be a next SIB1 acquisition. The wireless device may skip (e.g., not send (e.g., transmit)) the WUS transmission, for example, until it acquires (e.g., (re-)acquires) the SIB 1.

The wireless device may send (e.g., transmit) the WUS. The wireless device may send (e.g., transmit) the WUS, for example, during the first modification period. The wireless device sending (e.g., transmitting) the WUS during the first modification period may comprise sending (e.g., transmitting) the WUS (e.g., immediately sending (e.g., transmitting) the WUS). The wireless device may send (e.g., transmit) the WUS, for example, during the first modification period, if (e.g., even if) not supporting the ETWS and CMAS capabilities. The wireless device may send (e.g., transmit) the WUS, for example, during a second modification period. The second modification period may be, for example, immediately following the first modification period (e.g., the subsequent modification period). The wireless device may send (e.g., transmit) the WUS, for example, during a first eDRX acquisition period. The wireless device may receive the message (e.g., short message) indicating the SI change, for example, during the first eDRX acquisition period. The wireless device may send (e.g., transmit) the WUS, for example, during a second eDRX acquisition period. The second eDRX acquisition period may be, for example, immediately following the first eDRX acquisition period (e.g., the subsequent eDRX acquisition period).

The wireless device may receive the SIB 1. The wireless device may receive the SIB 1, for example, based on (e.g., in response to) sending (e.g., transmitting) the WUS. The base station may send (e.g., transmit) the SIB1 (e.g., on-demand), for example, based on (e.g., in response to) sending (e.g., transmitting) the WUS. The wireless device may receive a second message indicating one or more SIB1 transmissions (e.g., on-demand transmissions), for example, based on sending (e.g., transmitting) the WUS. The base station may send (e.g., transmit) the second message to the wireless device. The second message may comprise one or more fields of the second message. The one or more fields of the second message may indicate the one or more SIB1 transmissions. The second message may be an acknowledgement of the WUS. The second message may indicate the base station received the WUS.

The wireless device may receive the SIB1. The wireless device may receive the SIB1, for example, during the second modification period, if skipping (e.g., not sending (e.g., transmitting)) the WUS transmission. The wireless device may receive the SIB1, for example, during the second modification period, based on (e.g., in response to) receiving the SI change indication and skipping (e.g., not sending (e.g., transmitting)) the WUS. The base station may send (e.g., transmit) the SIB1 (e.g., during the second modification period), for example, based on (e.g., in response to) sending (e.g., transmitting) the SI change indication.

The wireless device may receive the SIB1. The wireless device may receive the SIB1, for example, during the second eDRX acquisition period, if skipping (e.g., not sending (e.g., transmitting)) the WUS transmission. The wireless device may receive the SIB1, for example, during the second eDRX acquisition period, based on (e.g., in response to) receiving the SI change indication and skipping (e.g., not sending (e.g., transmitting)) the WUS. The base station may send (e.g., transmit) the SIB1 (e.g., during the second eDRX acquisition period), for example, based on (e.g., in response to) sending (e.g., transmitting) the SI change indication.

The wireless device may skip (e.g., not send (e.g., transmit)) one or more WUS transmissions. The wireless device may skip (e.g., not send (e.g., transmit)) one or more WUS transmissions, for example, during a second time window, based on (e.g., in response to) receiving the message. The wireless device may skip (e.g., not send (e.g., transmit)) the one or more WUS transmissions, for example, during the second time window, based on (e.g., in response to) the one or more fields of the message. The wireless device may determine/calculate the second time window, for example, based on the one or more fields (of the message). The one or more configuration parameters may indicate the second time window.

The wireless device may receive a MIB (e.g., of the cell). Receiving a MIB may refer to decoding a MIB, decoding a PBCH, obtaining a MIB, receiving an indication indicating a MIB, or receiving one or more parameters of/indicating a MIB. The base station may send (e.g., transmit) the MIB to the wireless device. The MIB may comprise one or more fields. The one or more fields (of the MIB) may indicate whether the cell supports the message (e.g., short message) indicating/activating the SIB1 transmission (e.g., on-demand).

The wireless device may send (e.g., transmit) a capability message. The wireless device may send (e.g., transmit) a capability message indicating support for determining the SIB1 is active (e.g., being sent (e.g., transmitted) by the base station), for example, based on (e.g., in response to) the message (e.g., short message). The base station may receive the capability message from the wireless device.

The SI change/modification may comprise/be a change in SIB1 (e.g., change in one or more parameters indicated by the SIB 1). The SI change/modification may not comprise/be a change in the SIB 1. The SI change/modification may comprise/be a change in the SI messages (e.g., a SIB other than SIB1).

The wireless device may acquire (e.g., (re-)acquire) the SI messages. The wireless device may acquire (e.g., (re-)acquire) the SI messages, for example, during the first modification period. The wireless device may acquire (e.g., (re-)acquire) the SI messages, for example, based on (e.g., in response to) acquiring (e.g., (re-)acquiring) the SIB1. The wireless device may perform an SI acquisition procedure, for example, during the first modification period. The wireless device may perform the SI acquisition procedure, for example, based on (e.g., in response to) acquiring (e.g., (re-)acquiring) the SIB1.

The wireless device may receive one or more second configuration parameters indicating a second SIB1. The second SIB1 may not be for on-demand transmission (e.g., not configured/indicated for on-demand transmission). The second SIB1 may be broadcast. The base station may send (e.g., transmit) the one or more second configuration parameters to the wireless device. The base station may send (e.g., transmit) (e.g., broadcast) the second SIB1 to the wireless device. The wireless device may receive a third message (e.g., short message) indicating a second change in SI (e.g., second SI change notification/indication). The base station may send (e.g., transmit) the third message to the wireless device. The wireless device may receive the third message, for example, during the first modification period. The wireless device may acquire (e.g., (re-)acquire) the second SIB1, for example, during the second modification period. The wireless device may acquire (e.g., (re-)acquire) the second SIB1 (e.g., during the second modification period), for example, based on receiving the second message. The wireless device may acquire the SIB 1, for example, during the first modification period.

The wireless device may determine if/whether the SIB1 is active (e.g., being sent (e.g., transmitted)). The wireless device may determine if/whether the SIB1 is active (e.g., being sent (e.g., transmitted)), for example, based on (e.g., in response to) receiving the message indicating the SI change. The wireless device may determine the SIB1 is not active (e.g., inactive, not being sent (e.g., transmitted), and/or deactivated), for example, based on (e.g., in response to) receiving the message indicating the SI change. The wireless device may send (e.g., transmit) the WUS, for example, based on (e.g., in response to) determining the SIB1 is not active (e.g., inactive, not being sent (e.g., transmitted), and/or deactivated). The wireless device may send (e.g., transmit) the WUS, for example, based on (e.g., in response to) determining the SIB1 is not active (e.g., inactive, not being sent (e.g., transmitted), and/or deactivated) and receiving the message.

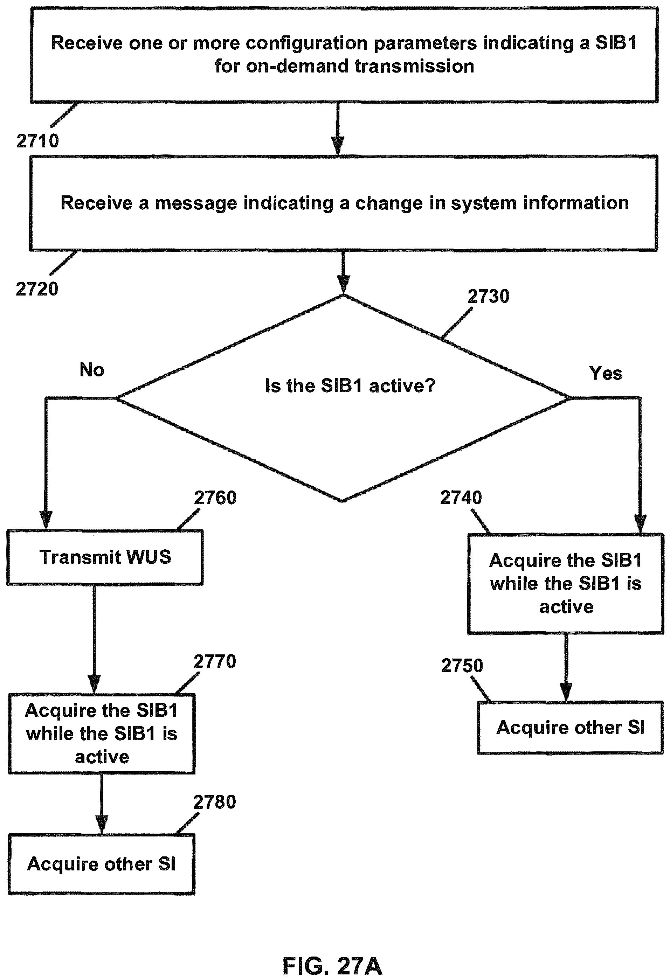

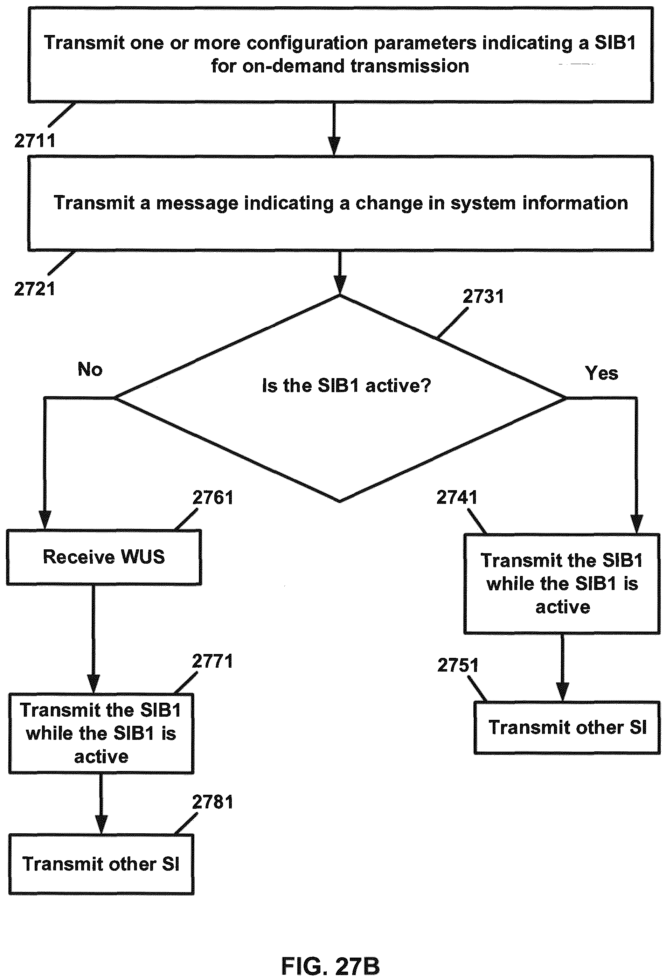

FIG. 27A and FIG. 27B show example methods of energy saving in a wireless communication system. A wireless device may receive one or more configuration parameters indicating a SIB 1 for on-demand transmission, as shown at step 2710 in FIG. 27A. A base station may send (e.g., transmit) the one or more configuration parameters to the wireless device, as shown at step 2711 in FIG. 27B. The wireless device may receive a message (e.g., short message) indicating a change in SI (e.g., an SI change/modification), as shown at step 2720 in FIG. 27A. The base station may send (e.g., transmit) the message to the wireless device, as shown at step 2721 in FIG. 27B. The wireless device may determine if/whether the SIB1 is active, as shown at step 2730 in FIG. 27A. The wireless device may determine if/whether the SIB 1 is active, for example, based on (e.g., in response to) receiving the message indicating the change in SI. The base station may indicate if/whether the SIB1 is active, as shown at step 2731 in FIG. 27B. The base station may indicate if/whether the SIB1 is active, for example, based on sending (e.g., transmitting) the message indicating the change in SI.

The wireless device may acquire (e.g., (re-)acquire) the SIB 1. The wireless device may acquire (e.g., (re-)acquire) the SIB 1, for example, if the wireless device determines the SIB1 is active. The wireless device may acquire (e.g., (re-)acquire) the SIB1, for example, if/while the SIB1 is active, as shown at step 2740 in FIG. 27A. The base station may send (e.g., transmit) the SIB1 (e.g., on-demand) to the wireless device, for example, if/while the SIB1 is active, as shown at step 2741 in FIG. 27B. The wireless device may acquire other SI, for example, based on (e.g., in response to) receiving the SIB1, as shown at step 2750 in FIG. 27A. The wireless device may use/apply an SI acquisition procedure. The base station may send (e.g., transmit) the other SI to the wireless device, as shown at step 2751 in FIG. 27B.

The wireless device may send (e.g., transmit) a WUS (e.g., to request the SIB1 on-demand). The wireless device may send (e.g., transmit) a WUS (e.g., to request the SIB1 on-demand), for example, if the wireless device determines the SIB1 is inactive (e.g., not active, not sent (e.g., transmitted)). The wireless device may send (e.g., transmit) the WUS, as shown at step 2760 in FIG. 27A. The wireless device may send (e.g., transmit) the WUS, for example, based on (e.g., in response to) the SIB1 being inactive and receiving the message. The base station may receive the WUS from the wireless device, as shown at step 2761 in FIG. 27B. The base station may send (e.g., transmit) the SIB1, for example, based on (e.g., in response to) receiving the WUS, as shown at step 2771 in FIG. 27B. The SIB1 may be activated, for example, based on (e.g., in response to) the wireless device sending (e.g., transmitting) the WUS. A wireless device may acquire (e.g., (re-)acquire) the SIB1, for example, if/while the SIB1 is active, as shown at step 2770 in FIG. 27A. The wireless device may receive the SIB1 from the base station, for example, based on (e.g., in response to) sending (e.g., transmitting) the WUS. The wireless device may acquire (e.g., (re-)acquire) other SI (e.g., not comprising SIB1), as shown at step 2780 in FIG. 27A. The wireless device may acquire (e.g., (re-)acquire) the other SI (e.g., not comprising SIB1), for example, based on (e.g., in response to) receiving the SIB1. The base station may send (e.g., transmit) the other SI to the wireless device, as shown at step 2781 in FIG. 27B. The wireless device may use/apply an SI acquisition procedure, for example, based on receiving the SIB 1.

The wireless device may, if configured (e.g., indicated, scheduled, and/or triggered) with a SIB1 for on-demand transmission, send (e.g., transmit) a WUS and re-acquire (e.g., acquire) the SIB1 (e.g., immediately re-acquire (e.g., acquire) the SIB1). The wireless device may, if configured (e.g., indicated, scheduled, and/or triggered) with a SIB1 for on-demand transmission, send (e.g., transmit) a WUS and re-acquire (e.g., acquire) the SIB1 (e.g., immediately re-acquire (e.g., acquire) the SIB1), for example, if a wireless device receives a message (e.g., short message) indicating an SI change (e.g., SI modification). The wireless device may use/apply an SI acquisition procedure, for example, after re-acquiring (e.g., acquiring) the SIB1 (e.g., immediately re-acquiring (e.g., acquiring) the SIB1).

The wireless device may, if configured (e.g., indicated, scheduled, and/or triggered) with a SIB1 for on-demand transmission, send (e.g., transmit) a WUS and re-acquire (e.g., acquire) the SIB1 (e.g., immediately re-acquire (e.g., acquire) the SIB1). The wireless device may, if configured (e.g., indicated, scheduled, and/or triggered) with a SIB1 for on-demand transmission, send (e.g., transmit) a WUS and re-acquire (e.g., acquire) the SIB1 (e.g., immediately re-acquire (e.g., acquire) the SIB1), for example, if a wireless device receives a message (e.g., short message) comprising a WUS bit set to 1 (e.g., set). The wireless device may use/apply an SI acquisition procedure, for example, after re-acquiring (e.g., acquiring) the SIB1 (e.g., immediately re-acquiring (e.g., acquiring) the SIB1).

The wireless device may re-acquire the SIB1 (e.g., immediately re-acquire the SIB 1). The wireless device may re-acquire the SIB1 (e.g., immediately re-acquire the SIB1), for example, if a wireless device receives a message (e.g., short message) indicating an SI change for emergency services (e.g., *etwsAndCmasIndication*) and if the wireless device is ETWS or CMAS capable. The wireless device may send (e.g., transmit) a WUS, for example, if a WUS bit of the message (e.g., short message) is set to 1 (e.g., set).

The wireless device may send (e.g., transmit) a WUS and re-acquire the SIB1. The wireless device may send (e.g., transmit) a WUS and re-acquire the SIB1, for example, if the wireless device receives the message (e.g., short message) indicating an SI change (e.g., with *systemInfoModification* set to 1) and does not operate an eDRX cycle (e.g., Idle eDRX cycle) longer than a modification period. The wireless device may send (e.g., transmit) a WUS, for example, during a next modification period. The wireless device may send (e.g., transmit) a WUS, for example, during a current modification period. The wireless device may use/apply an SI acquisition procedure.

The wireless device may send (e.g., transmit) a WUS and re-acquire the SIB1. The wireless device may send (e.g., transmit) a WUS and re-acquire the SIB1, for example, if the wireless device receives the message (e.g., short message) indicating an SI change (e.g., with *systemInfoModification-eDRX* set to 1) and does operate an eDRX cycle (e.g., Idle eDRX cycle) longer than a modification period. The wireless device may send (e.g., transmit) a WUS, for example, during a next eDRX acquisition period. The wireless device may send (e.g., transmit) a WUS, for example, during a current eDRX acquisition period. The wireless device may use/apply an SI acquisition procedure.

The wireless device may, if configured (e.g., indicated, scheduled, and/or triggered) with a SIB1 for on-demand transmission, re-acquire (e.g., acquire) the SIB1 (e.g., immediately re-acquire (e.g., acquire) the SIB1). The wireless device may, if configured (e.g., indicated, scheduled, and/or triggered) with a SIB1 for on-demand transmission, re-acquire (e.g., acquire) the SIB1 (e.g., immediately re-acquire (e.g., acquire) the SIB 1), for example, if a wireless device receives a message (e.g., short message) indicating an SI change (e.g., SI modification, with *systemInfoModification* set to 1). The wireless device may use/apply an SI acquisition procedure, for example, after re-acquiring (e.g., acquiring) the SIB1 (e.g., immediately re-acquiring (e.g., acquiring) the SIB1).

A short message field (e.g., one or more bits) may indicate a time window for SIB1 transmission on-demand. A short message bit (e.g., bit 5) may indicate a SIB1 is sent (e.g., transmitted) on-demand (e.g., SIB1 is configured for on-demand transmission). The SIB1 may be broadcast, for example, if the short message bit is set to a first value (e.g., 0). The SIB1 may be sent (e.g., transmitted) on-demand, for example, if the short message bit is set to a second value (e.g., 1).

A second short message bit (e.g., bit 6) may indicate if a WUS transmission is required. A second short message bit (e.g., bit 6) may indicate if a WUS transmission is required, for example, if an SI change is notified. The WUS transmission may be required if an SI change is notified. The WUS transmission may be required if an SI change is notified, for example, if the second short message bit is set to a first value (e.g., 0). The WUS transmission may not be required if an SI change is notified. The WUS transmission may not be required if an SI change is notified, for example, if the second short message bit is set to a second value (e.g., 1).

It should be understood that any discussion of operations from the perspective of wireless device may also be used/applied to a base station. Reciprocal operations may not be stated explicitly for each and/or every operation, although it is implied and a part incorporated herein. For example, if a transmitter device (e.g., a wireless device or a base station) described herein sends (e.g., transmits) a signal, a receiver device (e.g., a wireless device or a base station) receives the signal. Reciprocal determinations and/or timer operations may occur to ensure alignment between operations of the transmitter device and receiver device. Furthermore, as an example of reciprocal operations, a wireless device may determine a time to send (e.g., transmit) a signal based on a grant and a base station may determine the time to receive the signal and/or determine the time to schedule the signal for the wireless device to send (e.g., transmit) via the grant. Similarly, as another reciprocal operation, if a receiver device (e.g., a wireless device or a base station) monitors for a signal or monitors a channel, a transmitter device (e.g., a wireless device or a base station) sends (e.g., transmits) the signal or sends (e.g., transmits) the channel.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device, at least one configuration parameter indicating a system information block for on-demand transmission via a cell.

Clause 2. The method of clause 1, further comprising receiving, during an inactive period of the system information block for on-demand transmission via the cell, an indication of a change in system information for the cell.

Clause 3. The method of clause 1 or clause 2, further comprising determining, based on the indication of the change in system information for the cell, that the system information block for on-demand transmission via the cell has become active.

Clause 4. The method of any one of clauses 1 to 3, further comprising receiving, during an active period of the system information block for on-demand transmission via the cell, updated system information.

Clause 5. The method of any one of clauses 1 to 4, further comprising receiving, during an active time window, the system information block for on-demand transmission via the cell, wherein the receiving is based on: receiving the indication of the change in system information for the cell; and the at least one configuration parameter indicating the system information block for on-demand transmission via the cell.

Clause 6. The method of any one of clauses 1 to 5, wherein the receiving the indication comprises receiving a message comprising at least one field, and wherein the determining comprises: determining, based on the at least one field, an expectation of receiving the system information block for on-demand transmission via the cell.

Clause 7. The method of any one of clauses 1 to 6, wherein the receiving the indication comprises receiving a message comprising at least one field, and wherein the determining comprises: determining, based on the at least one field, a time window in which the system information block for on-demand transmission via the cell is sent.

Clause 8. The method of any one of clauses 1 to 7, wherein the receiving the indication comprises receiving a message comprising at least one field, and wherein the determining further comprises: determining, based on the at least one field, deactivating a wake-up signal (WUS) transmission.

Clause 9. The method of any one of clauses 1 to 8, wherein receiving the indication comprises receiving a message via: an Earthquake and Tsunami Warning System (ETWS); or a Commercial Mobile Alert Service (CMAS).

Clause 10. The method of any one of clauses 1 to 9, wherein the system information block for on-demand transmission via the cell comprises a system information block type 1 (SIB1).

Clause 11. The method of any one of clauses 1 to 10, wherein the receiving the at least one configuration parameter indicating the system information block for on-demand transmission via the cell further comprises receiving a master information block (MIB) comprising at least one field.

Clause 12. The method of any one of clauses 1 to 11, wherein the receiving the indication is during a modification period, and wherein the receiving the updated system information is during a subsequent modification period.

Clause 13. The method of any one of clauses 1 to 12, wherein receiving a message indicating the change in system information for the cell is during an extended discontinuous reception (eDRX) acquisition period, and wherein a time window is during a subsequent eDRX acquisition period.

Clause 14. The method of any one of clauses 1 to 13, further comprising receiving further system information during the modification period.

Clause 15. The method of any one of clauses 1 to 14, wherein a message comprises one or more fields indicating one or more of: a start time of an active time window; an end time of an active time window; or a duration of an active time window.

Clause 16. A method comprising receiving, by a wireless device, at least one configuration parameter indicating a system information block for on-demand transmission via a cell.

Clause 17. The method of clause 16, further comprising receiving a message indicating a change in system information for the cell.

Clause 18. The method of clause 16 or clause 17, further comprising receiving, during an active time window, the system information block for on-demand transmission via the cell.

Clause 19. The method of any one of clauses 16 to 18, wherein the receiving is based on: receiving the message; and the at least one configuration parameter indicating the system information block for on-demand transmission via the cell.

Clause 20. The method of any one of clauses 16 to 19, further comprising determining, based on the message indicating the change in system information for the cell, that the system information block for on-demand transmission via the cell has become active.

Clause 21. The method of any one of clauses 16 to 20, further comprising determining, based on the message, the time window.

Clause 22. The method of any one of clauses 16 to 21, wherein the receiving the message indicating the change in system information for the cell is during a modification period, and wherein the time window is during a subsequent modification period.

Clause 23. The method of any one of clauses 16 to 22, wherein the receiving the message indicating the change in system information for the cell is during an extended discontinuous reception (eDRX) acquisition period, and wherein the time window is during a subsequent eDRX acquisition period.

Clause 24. The method of any one of clauses 16 to 23, wherein the active time window comprises a time during which the system information block for on-demand transmission via the cell is sent.

Clause 25. The method of any one of clauses 16 to 24, wherein the message comprises one or more fields indicating one or more of: a start time of the active time window; an end time of the active time window; or a duration of the active time window.

Clause 26. The method of any one of clauses 16 to 25, wherein the system information block for on-demand transmission via the cell comprises a system information block type 1 (SIB1).

Clause 27. A computing device comprising: one or more processors; and memory storing instructions that, when executed by the one or more processors, cause the computing device to perform the method of any one of clauses 1 to 26.

Clause 28. A system comprising: a wireless device configured to perform the method of any one of clauses 1 to 26; and a base station configured to send one or more messages.

Clause 29. A computer-readable medium storing instructions that, when executed, cause performance of the method of any one of clauses 1 to 26.

Clause 30. A method comprising sending, by a base station, at least one configuration parameter indicating a system information block for on-demand transmission via a cell.

Clause 31. The method of clause 30, further comprising sending, during an inactive period of the system information block for on-demand transmission via the cell, an indication of a change in system information for the cell.

Clause 32. The method of clause 30 or clause 31, further comprising, based on sending the indication of the change in system information for the cell, sending updated system information.

Clause 33. The method of any one of clauses 30 to 32, further comprising skipping, during the inactive period of the system information block for on-demand transmission via the cell, a scheduled transmission of the system information block for on-demand transmission via the cell.

Clause 34. The method of any one of clauses 30 to 33, wherein the sending the indication comprises sending a message comprising at least one field, and wherein the sending the updated system information further comprises:

sending, during a time window based on the at least one field, the system information block for on-demand transmission via the cell.

Clause 35. A computing device comprising: one or more processors; and memory storing instructions that, when executed by the one or more processors, cause the computing device to perform the method of any one of clauses 30 to 34.

Clause 36. A system comprising: a wireless device configured to receive one or more messages; and a base station configured to perform the method of any one of clauses 30 to 34.

Clause 37. A computer-readable medium storing instructions that, when executed, cause performance of the method of any one of clauses 30 to 34.

Clause 38. A method comprising receiving, by a wireless device, one or more configuration parameters indicating a system information block type 1 (SIB1), of a cell for energy saving, for on-demand transmission.

Clause 39. The method of clause 38, further comprising receiving a message indicating a change in system information of the cell, while the SIB1 is inactive.

Clause 40. The method of clause 38 or clause 39, further comprising determining the SIB1 of the cell becomes active in response to receiving the message.

Clause 41. The method of any one of clauses 38 to 40, further comprising acquiring the SIB1 of the cell while the SIB1 is active.

Clause 42. The method of any one of clauses 38 to 41, further comprising determining the SIB1 is inactive in response to the one or more configuration parameters.

Clause 43. The method of any one of clauses 38 to 42, wherein the message comprises a short message.

Clause 44. The method of any one of clauses 38 to 43, wherein the SIB1 being active comprises the SIB1 being transmitted by a base station.

Clause 45. The method of any one of clauses 38 to 44, wherein the SIB1 is active during a time window.

Clause 46. The method of any one of clauses 38 to 45, wherein the acquiring is during the time window.

Clause 47. The method of any one of clauses 38 to 46, wherein the one or more configuration parameters indicate the time window.

Clause 48. The method of any one of clauses 38 to 47, wherein the short message indicates the time window.

Clause 49. The method of any one of clauses 38 to 48, wherein the short message comprises one or more fields.

Clause 50. The method of any one of clauses 38 to 49, wherein the one or more fields indicate the time window.

Clause 51. The method of any one of clauses 38 to 50, further comprising determining the time window based on the one or more fields.

Clause 52. The method of any one of clauses 38 to 51, wherein the time window is during a first modification period.

Clause 53. The method of any one of clauses 38 to 52, wherein the receiving the short message is during the first modification period.

Clause 54. A method comprising receiving, by a wireless device, one or more configuration parameters indicating a system information block type 1 (SIB1) for on-demand transmission.

Clause 55. The method of clause 54, further comprising receiving a message indicating a change in system information.

Clause 56. The method of clause 54 or clause 55, further comprising acquiring, during a time window, the SIB1 based on: receiving the message; and the one or more configuration parameters indicating the SIB1 for on-demand transmission.

Clause 57. The method of any one of clauses 54 to 56, wherein the SIB1 is active during the time window.

Clause 58. The method of any one of clauses 54 to 57, further comprising determining the SIB 1 is active, during the time window, based on: receiving the message; and the one or more configuration parameters indicating the SIB1 for on-demand transmission.

Clause 59. The method of any one of clauses 54 to 58, wherein the message comprises/is a short message.

Clause 60. The method of any one of clauses 54 to 59, wherein the SIB1 being active comprises the SIB 1 being transmitted by a base station.

Clause 61. The method of any one of clauses 54 to 60, wherein the one or more configuration parameters indicate the time window.

Clause 62. The method of any one of clauses 54 to 61, wherein the short message indicates the time window.

Clause 63. The method of any one of clauses 54 to 62, wherein the short message comprises one or more fields.

Clause 64. The method of any one of clauses 54 to 63, wherein the one or more fields indicate the time window.

Clause 65. The method of any one of clauses 54 to 64, further comprising determining the time window based on the one or more fields.

Clause 66. The method of any one of clauses 54 to 65, wherein the time window is during a first modification period.

Clause 67. The method of any one of clauses 54 to 66, wherein the short message indicates the SIB1 is active.

Clause 68. The method of any one of clauses 54 to 67, wherein the one or more fields indicate the SIB 1 is active.

Clause 69. The method of any one of clauses 54 to 68, further comprising skipping (or not transmitting, etc) a wake up signal (WUS) transmission.

Clause 70. The method of any one of clauses 54 to 69, further comprising transmitting a WUS in response to the receiving the short message, wherein the WUS indicates a request for SIB1 transmission (on-demand).

Clause 71. The method of any one of clauses 54 to 70, wherein the one or more fields indicate whether to skip or not skip WUS transmission.

Clause 72. The method of any one of clauses 54 to 71, wherein the transmitting the WUS is during a first modification period.

Clause 73. The method of any one of clauses 54 to 72, wherein the receiving the short message is during the first modification period.

Clause 74. The method of any one of clauses 54 to 73, wherein the acquiring is in response to the one or more fields.

Clause 75. The method of any one of clauses 54 to 74, wherein the transmitting the WUS is during a second modification period.

Clause 76. The method of any one of clauses 54 to 75, wherein the transmitting the WUS is during a first eDRX acquisition period.

Clause 77. The method of any one of clauses 54 to 76, further comprising determining to deactivate/disable WUS in response to the one or more fields.

Clause 78. The method of any one of clauses 54 to 77, wherein the deactivating/disabling the WUS is for a second time window.

Clause 79. The method of any one of clauses 54 to 78, wherein the one or more fields indicate the second time window.

Clause 80. The method of any one of clauses 54 to 79, further comprising receiving a second message indicating one or more SIB 1 transmissions.

Clause 81. The method of any one of clauses 54 to 80, further comprising: receiving a master information block (MIB) comprising one or more fields; and the acquiring is further based on the one or more fields.

Clause 82. The method of any one of clauses 54 to 81, wherein the MIB is of a cell.

Clause 83. The method of any one of clauses 54 to 82, wherein the one or more fields indicate whether the cell supports the short message indicating/activating SIB1 transmission.

Clause 84. The method of any one of clauses 54 to 83, further comprising transmitting a capability message indicating support for determining SIB1 is active based on the short message.

Clause 85. The method of any one of clauses 54 to 84, wherein the change in system information comprises/is a change in SIB 1.

Clause 86. The method of any one of clauses 54 to 85, wherein the change in system information does not comprise a change in SIB1.

Clause 87. The method of any one of clauses 54 to 86, further comprising acquiring further system information during the first modification period.

Clause 88. The method of any one of clauses 54 to 87, further comprising performing a system information acquisition procedure during the first modification period.

Clause 89. The method of any one of clauses 54 to 88, wherein the second modification period is after the first modification period.

Clause 90. The method of any one of clauses 54 to 89, further comprising: receiving one or more second configuration parameters indicating a second SIB1, wherein the second SIB 1 is not for on-demand transmission; receiving a second message indicating a second change in system information during a first modification period; and acquiring, based on the receiving the second message, the second SIB1 during a second modification period.

Clause 91. The method of any one of clauses 54 to 90, wherein the acquiring the SIB1 is during the first modification period.

Clause 92. The method of any one of clauses 54 to 91, wherein the SIB1 is transmitted during the time window.

Clause 93. The method of any one of clauses 54 to 92, wherein the SIB1 is transmitted on-demand.

Clause 94. The method of any one of clauses 54 to 93, wherein the indication whether to skip or not skip is for a SIB 1 acquisition.

Clause 95. A computing device comprising: one or more processors; and memory storing instructions that, when executed by the one or more processors, cause the computing device to perform the method of any one of clauses 38 to 94.

Clause 96. A system comprising: a wireless device configured to perform the method of any one of clauses 38 to 94; and a base station configured to send one or more messages.

Clause 97. A computer-readable medium storing instructions that, when executed, cause performance of the method of any one of clauses 38 to 94.

Clause 98. A method comprising transmitting, by a base station and to a wireless device, one or more configuration parameters indicating a system information block type 1 (SIB1) for on-demand transmission.

Clause 99. The method of clause 98, further comprising not transmitting the SIB1 during a first time window for energy saving.

Clause 100. The method of clause 98 or clause 99, further comprising transmitting a message indicating a change in system information.

Clause 101. The method of any one of clauses 98 to 100, further comprising transmitting the SIB 1, during a second time window, based on transmitting the message.

Clause 102. A computing device comprising: one or more processors; and memory storing instructions that, when executed by the one or more processors, cause the computing device to perform the method of any one of clauses 98 to 101.

Clause 103. A system comprising: a wireless device configured to receive one or more messages; and a base station configured to perform the method of any one of clauses 98 to 101.

Clause 104. A computer-readable medium storing instructions that, when executed, cause performance of the method of any one of clauses 98 to 101.

A wireless device may perform a method comprising multiple operations. The wireless device may receive at least one configuration parameter indicating a system information block for on-demand transmission via a cell. The wireless device may receive an indication of a change in system information for the cell, for example, during an inactive period of the system information block for on-demand transmission via the cell. The wireless device may determine that the system information block for on-demand transmission via the cell has become active, for example, based on the indication of the change in system information for the cell. The wireless device may receive updated system information, for example, during an active period of the system information block for on-demand transmission via the cell. The wireless device may receive the system information block for on-demand transmission via the cell, for example, during an active time window. The wireless device may receive the system information block for on-demand transmission via the cell during the active time window, for example, based on receiving the indication of the change in system information for the cell. The wireless device may receive the system information block for on-demand transmission via the cell during the active time window, for example, based on the at least one configuration parameter indicating the system information block for on-demand transmission via the cell. The wireless device receiving the indication may comprise receiving a message. The message may comprise at least one field. The wireless device determining that the system information block for on-demand transmission via the cell has become active may comprise determining an expectation of receiving the system information block for on-demand transmission via the cell. The wireless device may determine the expectation of receiving the system information block for on-demand transmission via the cell, for example, based on the at least one field. The wireless device receiving the indication may comprise receiving a message. The message may comprise at least one field. The wireless device determining that the system information block for on-demand transmission via the cell has become active may comprise determining a time window in which the system information block for on-demand transmission of the cell is sent. The wireless device may determine the time window in which the system information block for on-demand transmission via the cell is sent, for example, based on the at least one field. The wireless device receiving the indication may comprise receiving a message. The message may comprise at least one field. The wireless device determining that the system information block for on-demand transmission via the cell has become active may comprise determining deactivating a wake-up signal (WUS) transmission. The wireless device may determine deactivating the wake-up signal (WUS) transmission, for example, based on the at least one field. The wireless device receiving the indication may comprise receiving a message. The wireless device may receive the message via an Earthquake and Tsunami Warning System (ETWS). The wireless device may receive the message via a Commercial Mobile Alert Service (CMAS). The system information block for on-demand transmission via the cell may comprise a system information block type 1 (SIB1). The wireless device receiving the at least one configuration parameter indicating the system information block for on-demand transmission via the cell may comprise receiving a master information block (MIB). The MIB may comprise at least one field. The wireless device may receive the indication, for example, during a modification period. The wireless device may receive the updated system information, for example, during a subsequent modification period. The wireless device may receive a message indicating the change in system information for the cell, for example, during an extended discontinuous reception (eDRX) acquisition period. A time window may be, for example, during a subsequent eDRX acquisition period. The wireless device may receive further system information, for example, during the modification period. A message may comprise one or more fields. The one or more fields may indicate one or more of a start time of an active time window, an end time of an active time window, or a duration of an active time window. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send one or more messages. A computer-readable medium may store instructions that, when executed, cause performance of the described method, additional operations, and/or include the additional elements.

A wireless device may perform a method comprising multiple operations. The wireless device may receive at least one configuration parameter indicating a system information block for on-demand transmission via a cell. The wireless device may receive a message indicating a change in system information for the cell. The wireless device may receive the system information block for on-demand transmission via the cell, for example, during an active time window. The wireless device may receive the system information block for on-demand transmission via the cell during the active time window, for example, based on receiving the message. The wireless device may receive the system information block for on-demand transmission via the cell during the active time window, for example, based on the at least one configuration parameter indicating the system information block for on-demand transmission via the cell. The wireless device may determine that the system information block for on-demand transmission via the cell has become active, for example, based on the message indicating the change in system information for the cell. The wireless device may determine the time window, for example, based on the message. The wireless device may receive the message indicating the change in system information for the cell, for example, during a modification period. The time window may be, for example, during a subsequent modification period. The wireless device may receive the message indicating the change in system information for the cell, for example, during an extended discontinuous reception (eDRX) acquisition period. The time window may be, for example, during a subsequent eDRX acquisition period. The active time window may comprise, for example, a time during which the system information block for on-demand transmission via the cell is sent. The message may comprise one or more fields. The one or more fields may indicate one or more of a start time of the active time window, an end time of the active time window, or a duration of the active time window. The system information block for on-demand transmission via the cell may comprise a system information block type 1 (SIB1). The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send one or more messages. A computer-readable medium may store instructions that, when executed, cause performance of the described method, additional operations, and/or include the additional elements.

A base station may perform a method comprising multiple operations. The base station may send at least one configuration parameter indicating a system information block for on-demand transmission via a cell. The base station may send an indication of a change in system information for the cell, for example, during an inactive period of the system information block for on-demand transmission via the cell. The base station may send updated system information, for example, based on sending the indication of the change in system information for the cell. The base station may skip (e.g., not send (e.g., transmit), delay, postpone, ignore, and/or cancel) a scheduled transmission of the system information block for on-demand transmission via the cell, for example, during the inactive period of the system information block for on-demand transmission via the cell. The base station sending the indication may comprise sending a message. The message may comprise at least one field. The base station sending the updated system information may comprise sending the system information block for on-demand transmission via the cell. The base station may send the system information block for on-demand transmission via the cell, for example, during a time window. The time window may be, for example, based on the at least one field. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a wireless device configured to receive the one or more messages. A computer-readable medium may store instructions that, when executed, cause performance of the described method, additional operations, and/or include the additional elements.

A wireless device may perform a method comprising multiple operations. The wireless device may receive one or more configuration parameters indicating a system information block type 1 (SIB1). The SIB1 may be for on-demand transmission. The SIB1 may be of a cell for energy saving. The wireless device may receive a message indicating a change in system information of the cell, for example, if/while the SIB1 is inactive. The wireless device may determine the SIB1 of the cell becomes active, for example, based on (e.g., in response to) receiving the message. The wireless device may acquire the SIB1 of the cell, for example, if/while the SIB1 is active. The wireless device may determine the SIB1 is inactive, for example, based on (e.g., in response to) the one or more configuration parameters. The message may comprise a short message. The SIB1 being active may comprise the SIB1 being sent (e.g., transmitted) by a base station. The SIB1 may be active, for example, during a time window. The wireless device may acquire the SIB 1, for example, during the time window. The one or more configuration parameters may indicate the time window. The short message may indicate the time window. The short message may comprise one or more fields. The one or more fields may indicate the time window. The wireless device may determine the time window, for example, based on the one or more fields. The time window may be, for example, during a first modification period. The wireless device may receive the short message, for example, during the first modification period. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and the base station configured to send one or more messages. A computer-readable medium may store instructions that, when executed, cause performance of the described method, additional operations, and/or include the additional elements.

A wireless device may perform a method comprising multiple operations. The wireless device may receive one or more configuration parameters indicating a system information block type 1 (SIB1) for on-demand transmission. The wireless device may receive a message indicating a change in system information. The wireless device may acquire the SIB 1, for example, during a time window. The wireless device may acquire the SIB1 during the time window, for example, based on receiving the message. The wireless device may acquire the SIB1 during the time window, for example, based on the one or more configuration parameters indicating the SIB1 for on-demand transmission. The SIB1 may be active, for example, during the time window. The wireless device may determine the SIB 1 is active, for example, during the time window. The wireless device may determine the SIB1 is active during the time window, for example, based on receiving the message. The wireless device may determine the SIB1 is active during the time window, for example, based on the one or more configuration parameters indicating the SIB 1 for on-demand transmission. The message may comprise/be a short message. The SIB 1 being active may comprise the SIB1 being sent (e.g., transmitted) by a base station. The one or more configuration parameters may indicate the time window. The short message may indicate the time window. The short message may comprise one or more fields. The one or more fields may indicate the time window. The wireless device may determine the time window, for example, based on the one or more fields. The time window may be, for example, during a first modification period. The short message may indicate the SIB1 is active. The one or more fields may indicate the SIB1 is active. The wireless device may skip (e.g., not send (e.g., transmit), delay, postpone, ignore, and/or cancel) a wake-up signal (WUS) transmission. The wireless device may send (e.g., transmit) a WUS, for example, based on (e.g., in response to) the receiving the short message. The WUS may indicate a request for SIB1 transmission (e.g., SIB transmission on-demand). The one or more fields may indicate if/whether to skip the WUS transmission. The one or more fields may indicate if/whether to not skip the WUS transmission. The wireless device may send (e.g., transmit) the WUS, for example, during a first modification period. The wireless device may receive the short message, for example, during the first modification period. The wireless device may acquire the SIB 1, for example, based on (e.g., in response to) the one or more fields. The wireless device may send (e.g., transmit) the WUS, for example, during a second modification period. The wireless device may send (e.g., transmit) the WUS, for example, during a first eDRX acquisition period. The wireless device may determine to deactivate/disable the WUS, for example, based on (e.g., in response to) the one or more fields. The wireless device may deactive/disable the WUS for a second time window. The one or more fields may indicate the second time window. The wireless device may receive a second message indicating one or more SIB1 transmissions. The wireless device may receive a master information block (MIB). The MIB may comprise one or more fields. The wireless device may acquire the SIB1, for example, based on the one or more fields. The MIB may be of a cell. The one or more fields may indicate if/whether the cell supports the short message indicating/activating the SIB1 transmission. The wireless device may send (e.g., transmit) a capability message. The capability message may indicate support for determining the SIB1 is active, for example, based on the short message. The change in system information may comprise/be a change in the SIB1. The change in system information may not comprise a change in the SIB1. The wireless device may acquire further system information, for example, during the first modification period. The wireless device may perform a system information acquisition procedure, for example, during the first modification period. The second modification period may be, for example, after (e.g., immediately following) the first modification period (e.g., the subsequent modification period). The wireless device may receive one or more second configuration parameters indicating a second SIB1. The second SIB1 may not be for on-demand transmission. The wireless device may receive a second message indicating a second change in system information, for example, during a first modification period. The wireless device may acquire the second SIB1, for example, during a second modification period. The wireless device may acquire the second SIB1 during the second modification period, for example, based on the receiving the second message. The wireless device may acquire the SIB1, for example, during the first modification period. The SIB1 may be sent (e.g., transmitted), for example, during the time window. The SIB1 may be sent (e.g., transmitted) on-demand. The indication if/whether to skip may be for a SIB1 acquisition. The indication if/whether not to skip may be for a SIB1 acquisition. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send one or more messages. A computer-readable medium may store instructions that, when executed, cause performance of the described method, additional operations, and/or include the additional elements.

A base station may perform a method comprising multiple operations. The base station may send (e.g., transmit) to a wireless device one or more configuration parameters. The one or more configuration parameters may indicate a system information block type 1 (SIB 1) for on-demand transmission. The base station may not send (e.g., transmit) the SIB 1, for example, during a first time window for energy saving. The base station may send (e.g., transmit) a message. The message may indicate a change in system information. The base station may send (e.g., transmit) the SIB1, for example, during a second time window. The base station may send (e.g., transmit) the SIB1 during the second time window, for example, based on sending (e.g., transmitting) the message. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a wireless device configured to receive one or more messages. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.  A method comprising:

    receiving, by a wireless device, at least one configuration parameter indicating a system information block for on-demand transmission via a cell;
    receiving, during an inactive period of the system information block for on-demand transmission via the cell, an indication of a change in system information for the cell;
    determining, based on the indication of the change in system information for the cell, that the system information block for on-demand transmission via the cell has become active; and
    receiving, during an active period of the system information block for on-demand transmission via the cell, updated system information.

2.  The method of claim 1, further comprising:
    receiving, during an active time window, the system information block for on-demand transmission via the cell, wherein the receiving is based on:

    receiving the indication of the change in system information for the cell; and
    the at least one configuration parameter indicating the system information block for on-demand transmission via the cell.

3.  The method of claim 1 or claim 2, wherein the receiving the indication comprises receiving a message comprising at least one field, and wherein the determining comprises:
    determining, based on the at least one field, an expectation of receiving the system information block for on-demand transmission via the cell.

4.  The method of any one of claims 1 to 3, wherein the receiving the indication comprises receiving a message comprising at least one field, and wherein the determining comprises:
    determining, based on the at least one field, a time window in which the system information block for on-demand transmission via the cell is sent.

5.  The method of any one of claims 1 to 4, wherein the receiving the indication comprises receiving a message comprising at least one field, and wherein the determining further comprises:
    determining, based on the at least one field, deactivating a wake-up signal (WUS) transmission.

6.  The method of any one of claims 1 to 5, wherein receiving the indication comprises receiving a message via:

    an Earthquake and Tsunami Warning System (ETWS); or
    a Commercial Mobile Alert Service (CMAS).

7. The method of any one of claims 1 to 6, wherein the system information block for on-demand transmission via the cell comprises a system information block type 1 (SIB1).

8. The method of any one of claims 1 to 7, wherein the receiving the at least one configuration parameter indicating the system information block for on-demand transmission via the cell further comprises receiving a master information block (MIB) comprising at least one field.

9. The method of any one of claims 1 to 8, wherein the receiving the indication is during a modification period, and wherein the receiving the updated system information is during a subsequent modification period.

10. The method of any one of claims 1 to 9, wherein receiving a message indicating the change in system information for the cell is during an extended discontinuous reception (eDRX) acquisition period, and wherein a time window is during a subsequent eDRX acquisition period.

11. The method of any one of claims 1 to 10, further comprising receiving further system information during the modification period.

12. The method of any one of claims 1 to 11, wherein a message comprises one or more fields indicating one or more of:

a start time of an active time window;
an end time of an active time window; or
a duration of an active time window.

13. A computing device comprising:

at least one processor; and
memory storing instructions that, when executed by the at least one processor, cause the computing device to perform the method of any one of claims 1 to 12.

14. A system comprising:

a wireless device configured to perform the method of any one of claims 1 to 12; and
a base station configured to send one or more messages.

15. A computer-readable medium storing instructions that, when executed, cause performance of the method of any one of claims 1 to 12.

**FIG. 1A**

**FIG. 1B**

EP 4 598 138 A1

FIG. 2A

FIG. 2B

**IP Packets**

**FIG. 3**

FIG. 4A

FIG. 4B

**FIG. 5B**

Uplink

Logical Channels: CCCH  DCCH  DTCH

Transport Channels: UL-SCH  RACH

Physical Channels: PUSCH  PUCCH  PRACH (UCI)

Physical Signals: DM-RS  PT-RS  SRS

**FIG. 5A**

Downlink

Logical Channels: PCCH  BCCH  CCCH  DCCH  DTCH

Transport Channels: PCH  BCH  DL-SCH

Physical Channels: PBCH  PDSCH  PDCCH (DCI)

Physical Signals: PSS/SSS  CSI-RS  DM-RS  PT-RS

FIG. 6

1 Frame (10 ms)

| 0 | 1 | 2 | 3 | 4 | 5 | 6 | 7 | 8 | 9 |

1 Subframe (1 ms)

Subcarrier spacing = 15 kHz
1 slot per subframe

1 Slot (1 ms, 14 OFDM Symbols)

Subcarrier spacing = 30 kHz
2 slots per subframe

1 Slot (0.5 ms, 14 OFDM Symbols)

Subcarrier spacing = 60 kHz
4 slots per subframe

1 Slot (0.25 ms, 14 OFDM Symbols)

Subcarrier spacing = 120 kHz
8 slots per subframe

1 Slot (0.0125 ms, 14 OFDM Symbols)

FIG. 7

Resource Element (RE)
1 Symbol x 1 Subcarrier

Resource Block (RB)
12 Subcarriers

NR Carrier Bandwidth
(Up to 3300 Subcarriers)

Frequency

Time

One Slot (14 Symbols)

FIG. 8

EP 4 598 138 A1

60

FIG. 9

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

**FIG. 10A**

PUCCH Group
1010

PUCCH Group
1050

Downlink
Component
Carriers

PCell
1011

SCell
1012

SCell
1013

PSCell
1051

SCell
1052

SCell
1053

UCI
1031

UCI
1032

UCI
1033

UCI
1071

UCI
1072

UCI
1073

Uplink
Component
Carriers

PCell
1021

SCell
1022

SCell
1023

PSCell
1061

SCell
1062

SCell
1063

**FIG. 10B**

**FIG. 11A**

**FIG. 11B**

FIG. 12A

FIG. 12B

FIG. 13A

FIG. 13B

FIG. 13C

CORESET 1403

CORESET 1402

CORESET 1401

CORESET 1404

Bandwidth

One slot

**FIG. 14A**

CORESET → CCE-to-REG mapping → Search Space → PDCCH candidate / PDCCH candidate / PDCCH candidate

**FIG. 14B**

EP 4 598 138 A1

FIG. 15A

**FIG. 15B**

**FIG. 16A**

**FIG. 16B**

**FIG. 16D**

**FIG. 16C**

EP 4 598 138 A1

| SCS | OFDM starting Symbols of the candidate SSBs | fc<=3GHz, Lmax=4 | 3GHz<fc<=6GHz, Lmax=8 | fc>6GHz, Lmax=64 |
|---|---|---|---|---|
| CaseA: 15 KHz | {2,8}+14n | n=0,1 | n=0,1,2,3 | Not Applicable (NA) |
| CaseB: 30 KHz | {4,8,16,20}+28n | n=0 | n=0,1 | NA |
| CaseC: 30 KHz | {2,8}+14n | n=0,1 | n=0,1,2,3 | NA |
| CaseD: 120 KHz | {4,8,16,20}+28n | NA | NA | n=0,1,2,3,5,6,7,8,10,11,12,13,15,16,17,18 |
| CaseE: 240 KHz | {8,12,16,20,32,36,40,44}+ 56n | NA | NA | n=0,1,2,3,5,6,7,8 |

FIG. 17

EP 4 598 138 A1

**Example parameters of SSB transmission:**
- SCS: 15KHz
- Frequency: 3GHz<fc<=6GHz
- Maximum Number of SSBs in SS burst (Lmax=8)
- SSB starting symbol indexes: 2, 8, 16, 22, 30, 36, 44, 50

PSS    PBCH    SSS

**FIG. 18**

FIG. 19

```
MIB ::=                      SEQUENCE {
    systemFrameNumber              BIT STRING (SIZE (6)),
    subCarrierSpacingCommon         ENUMERATED {scs15or60, scs30or120},
    ssb-SubcarrierOffset         INTEGER (0..15),
    dmrs-TypeA-Position           ENUMERATED {pos2, pos3},
    pdcch-ConfigSIB1            PDCCH-ConfigSIB1,
    cellBarred                ENUMERATED {barred, notBarred},
    intraFreqReselection          ENUMERATED {allowed, notAllowed},
    spare                    BIT STRING (SIZE (1))}


PDCCH-ConfigSIB1 ::=            SEQUENCE {
    controlResourceSetZero          ControlResourceSetZero,
    searchSpaceZero            SearchSpaceZero}
```

**FIG. 20**

```
SIB1 ::=       SEQUENCE {
    cellSelectionInfo              SEQUENCE {
        q-RxLevMin                     Q-RxLevMin,
        q-RxLevMinOffset               INTEGER (1..8) ...}
    cellAccessRelatedInfo          CellAccessRelatedInfo,
    connEstFailureControl          ConnEstFailureControl
    si-SchedulingInfo              SI-SchedulingInfo
    servingCellConfigCommon          ServingCellConfigCommonSIB
    ims-EmergencySupport           ENUMERATED {true}
    eCallOverIMS-Support           ENUMERATED {true}
    ue-TimersAndConstants          UE-TimersAndConstants
    uac-BarringInfo             SEQUENCE { ...}
    useFullResumeID                ENUMERATED {true}
    lateNonCriticalExtension       OCTET STRING
    nonCriticalExtension           SIB1-v16xy-IEs  }


ServingCellConfigCommonSIB ::=     SEQUENCE {
    downlinkConfigCommon               DownlinkConfigCommonSIB,
    uplinkConfigCommon                 UplinkConfigCommonSIB
    supplementaryUplink                UplinkConfigCommonSIB
    n-TimingAdvanceOffset              ENUMERATED { n0, n25600, n39936 }
    ssb-PositionsInBurst           SEQUENCE {
        inOneGroup                 BIT STRING (SIZE (8)),
        groupPresence              BIT STRING (SIZE (8)) },
    ssb-PeriodicityServingCell         ENUMERATED {ms5, ms10, ms20, ms40, ms80, ms160},
    tdd-UL-DL-ConfigurationCommon      TDD-UL-DL-ConfigCommon
    ss-PBCH-BlockPower                 INTEGER (-60..50),
    ...,}


DownlinkConfigCommonSIB ::=    SEQUENCE {
    frequencyInfoDL                FrequencyInfoDL-SIB,
    initialDownlinkBWP             BWP-DownlinkCommon,
    bcch-Config                    BCCH-Config,
    pcch-Config                    PCCH-Config, ...}

PCCH-Config ::=        SEQUENCE {
    defaultPagingCycle             PagingCycle,
    nAndPagingFrameOffset          CHOICE {
        oneT                       NULL,
        halfT                      INTEGER (0..1), ...},
    ns                             ENUMERATED {four, two, one},
    firstPDCCH-MonitoringOccasionOfPO   CHOICE {
        sCS15KHZoneT     SEQUENCE (SIZE (1..maxPO-perPF)) OF INTEGER (0..139),...}
    ...,
    [[  nrofPDCCH-MonitoringOccasionPerSSB-InPO-r16  INTEGER (2..4) ]]
}
```

**FIG. 21**

**Always-on SIB1** Cell 1

| SIB1 | SIB1 | SIB1 |

**On-demand SIB1** Cell 2

MIB | SIB1 | SIB1 | ... | MIB |

WUS indicating
wakeup

WUS indicating
go-to-sleep

MIB | ... | MIB | SIB1 | SIB1 |

WUS indicating
wakeup

**FIG. 22**

| Bit | Short Message |
|---|---|
| 1 | *systemInfoModification*<br>If set to 1: indication of a BCCH modification other than *SIB6*, *SIB7*, *SIB8* and *posSIBs*. |
| 2 | *etwsAndCmasIndication*<br>If set to 1: indication of an ETWS primary notification and/or an ETWS secondary notification and/or a CMAS notification. |
| 3 | *stopPagingMonitoring*<br>**This bit can be used for only operation with shared spectrum channel access and if** *nrofPDCCH-MonitoringOccasionPerSSB-InPO* **is present.**<br>If set to 1: indication that the UE may stop monitoring PDCCH occasion(s) for paging in this<br>Paging Occasion |
| 4 | *systemInfoModification-eDRX*<br>If set to 1: indication of a BCCH modification other than *SIB6*, *SIB7*, *SIB8* and *posSIBs*. This indication applies only to UEs using IDLE eDRX cycle longer than the BCCH modification period. |
| 5-8 | Reserved |

FIG. 23

EP 4 598 138 A1

Base Station 2402

Wireless Device 2401

**2410** Configuration parameters (e.g., MIB, OD-SIB1 parameters)

**2420** SI change notificaiton

$t_0$

$t_1$
Modification period n start

$t_2$

Determine SI has changed

How and when to acquire OD-SIB1?

$t_3$
Modification period n+1 start

**FIG. 24**

EP 4 598 138 A1

FIG. 25

2610

Receive one or more configuration parameters indicating a SIB1 for on-demand transmission

2620

Receive a message indicating a change in system information

2630

Acquire, during a time window, the SIB1 based on:
receiving the message; and
the one or more configuration parameters indicating the SIB1 for on-demand transmission, wherein the SIB1 is active during the time window

FIG. 26A

2611

Transmit one or more configuration parameters indicating a SIB1 for on-demand transmission

2621

Transmit a message indicating a change in system information

2631

Transmit, during a time window, the SIB1 based on:
transmitting the message; and
the one or more configuration parameters indicating the SIB1 for on-demand transmission, wherein the SIB1 is active during the time window

FIG. 26B

Receive one or more configuration parameters indicating a SIB1 for on-demand transmission

2710

Receive a message indicating a change in system information

2720

2730

Is the SIB1 active?

No

Yes

2760

Transmit WUS

2740

Acquire the SIB1 while the SIB1 is active

2770

Acquire the SIB1 while the SIB1 is active

2750

Acquire other SI

2780

Acquire other SI

FIG. 27A

Transmit one or more configuration parameters indicating a SIB1 for on-demand transmission

2711

Transmit a message indicating a change in system information

2721

2731

No ◇ Is the SIB1 active? Yes

2761

Receive WUS

2741

Transmit the SIB1 while the SIB1 is active

2771

Transmit the SIB1 while the SIB1 is active

2751

Transmit other SI

2781

Transmit other SI

**FIG. 27B**

Europäisches
Patentamt

European
Patent Office

Office européen
des brevets

# EUROPEAN SEARCH REPORT

**Application Number**

EP 25 15 5355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 537 825 A1 (CHINA ACADEMY TELECOMMUNICATIONS TECHNOLOGY [CN]) 11 September 2019 (2019-09-11) | 1-4,7-9, 11-15 | INV. H04W48/12 H04W52/02 |
| Y | * paragraph [0070] - paragraph [0087] * * paragraph [0103] - paragraph [0110] * * paragraph [0135] - paragraph [0140] * ----- | 5,6,10 | ADD. H04W76/28 |
| Y | US 2022/303902 A1 (TAO MING-HUNG [DE] ET AL) 22 September 2022 (2022-09-22) * paragraph [0126] - paragraph [0129] * * paragraph [0167] - paragraph [0181] * * paragraph [0205] - paragraph [0206] * ----- | 5,6,10 | |
| A | US 2023/328645 A1 (SHIKARI MURTAZA A [US] ET AL) 12 October 2023 (2023-10-12) * paragraph [0109] - paragraph [0113] * * paragraph [0146] - paragraph [0150] * ----- | 1-15 | |
| A | WO 2023/234014 A1 (NEC CORP [JP]) 7 December 2023 (2023-12-07) * the whole document * ----- | 1-15 | TECHNICAL FIELDS SEARCHED (IPC) H04W |

The present search report has been drawn up for all claims

| Place of search | Date of completion of the search | Examiner |
|---|---|---|
| Munich | 18 June 2025 | Straniero, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 5355

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | Publication date |
|---|---|---|---|
| EP 3537825 A1 | 11-09-2019 | CN 108024380 A | 11-05-2018 |
| | | EP 3537825 A1 | 11-09-2019 |
| | | JP 6809756 B2 | 06-01-2021 |
| | | JP 2019533375 A | 14-11-2019 |
| | | KR 20190069571 A | 19-06-2019 |
| | | US 2019268922 A1 | 29-08-2019 |
| | | WO 2018082494 A1 | 11-05-2018 |
| US 2022303902 A1 | 22-09-2022 | EP 3764701 A1 | 13-01-2021 |
| | | EP 3997918 A1 | 18-05-2022 |
| | | JP 2022539694 A | 13-09-2022 |
| | | US 2022303902 A1 | 22-09-2022 |
| | | WO 2021008756 A1 | 21-01-2021 |
| US 2023328645 A1 | 12-10-2023 | CN 112399527 A | 23-02-2021 |
| | | US 2021051583 A1 | 18-02-2021 |
| | | US 2023319712 A1 | 05-10-2023 |
| | | US 2023328645 A1 | 12-10-2023 |
| WO 2023234014 A1 | 07-12-2023 | GB 2619495 A | 13-12-2023 |
| | | JP 2025516541 A | 30-05-2025 |
| | | WO 2023234014 A1 | 07-12-2023 |

EPO FORM P0459

For more details about this annex : see Official Journal of the European Patent Office, No. 12/82

**EP 4 598 138 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63548931